# EUROPEAN PATENT APPLICATION

(11) **EP 4 379 244 A1**
(43) Date of publication of application: **05.06.2024**
(21) Application number: 23779997.8
(22) Date of filing: 23.03.2023
(51) Int. Cl.: F16K 31/124

(54) **FLOW RATE CONTROL VALVE**

(30) Priority: 28.03.2022 JP 2022051841
(71) Applicant: Hitachi Construction Machinery Co., Ltd., Tokyo 110-0015 (JP)
(72) Inventor: KAWASUMI, Shohei, Tsuchiura-shi, Ibaraki 300-0013 (JP)
(74) Representative: Manitz Finsterwald Patent- und Rechtsanwaltspartnerschaft mbB
(86) International application number: PCT/JP2023/011361
(87) International publication number: WO 2023/189986

(57) **Abstract**

A feedback throttle (54) increases the opening amount between a feedback flow passage (49) and a back pressure chamber (47) as a main valve (43) is displaced in the direction away from a main valve seat (46). The feedback throttle (54) has a boundary portion K that divides a section where the opening amount of the feedback throttle (54) changes such that a ratio of change in the opening amount of the feedback throttle (54) to a displacement of the main valve (43) in the direction coming closer to the main valve seat (46) becomes smaller. The boundary portion K is located in a displacement area of the main valve (43) corresponding to a position where an opening portion of a main valve throttle (53) is shut off with respect to the displacement of the main valve (43) in the direction coming closer to the main valve seat (46) .

## Description

### TECHNICAL FIELD

The present disclosure relates to a flow control valve, for example, provided in a hydraulic circuit of a construction machine and controlling the flow rate of hydraulic oil supplied from a hydraulic pump to an actuator.

### BACKGROUND ART

Hydraulic circuits of construction machines such as a hydraulic excavator, a hydraulic crane, and a wheel loader are provided with a seat valve type of flow control valve having a flow rate control function. For example, Patent Document 1 describes a spool valve including a check valve (main valve).

### PRIOR ART DOCUMENT

### PATENT DOCUMENT

Patent Document 1: Japanese Patent Laid-Open No. 2006-017273 A (Patent Publication No. 4463028)

### SUMMARY OF THE INVENTION

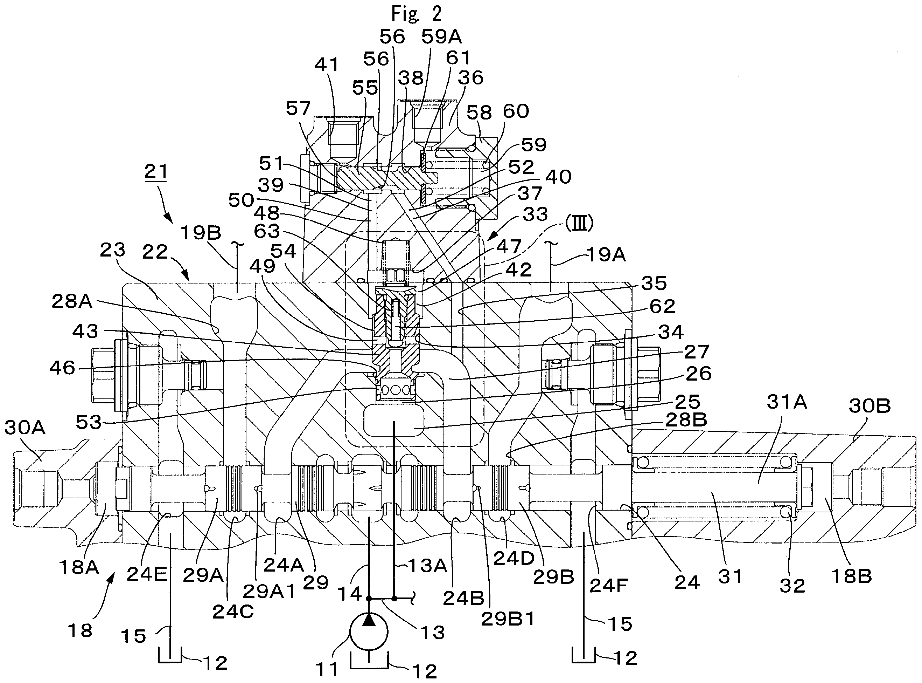

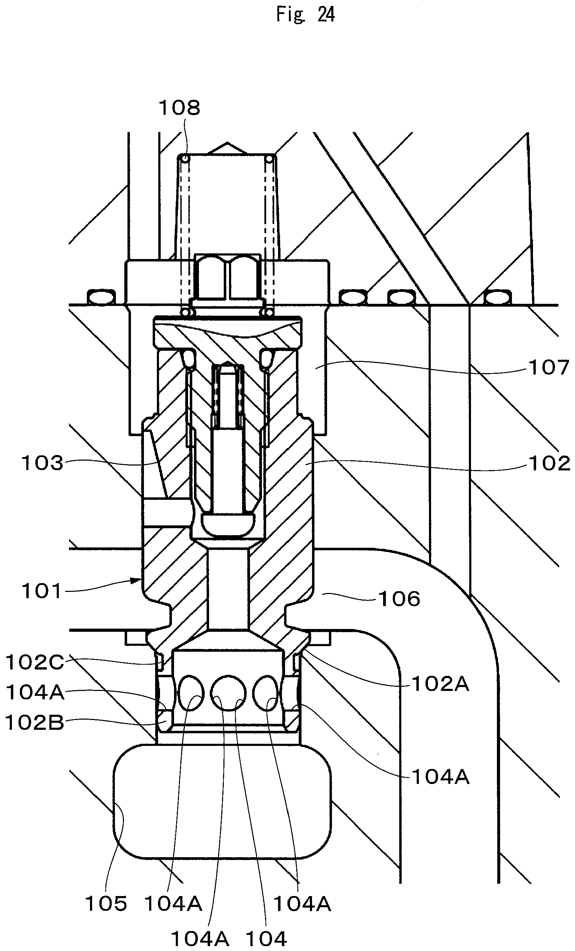

Fig. 24 shows a flow control valve 101 according to a Comparative Example. The flow control valve 101 according to the Comparative Example is incorporated into a control valve device 21 as later shown in Fig. 2, for example. A flow control valve 33 (main valve 43) according to a first embodiment is incorporated into the control valve device 21 later shown in Fig. 2. Herein, the case in which the flow control valve 101 (main valve 102) according to the Comparative Example in Fig. 24, rather than the flow control valve 33 (main valve 43) according to the first embodiment in Fig. 2, is incorporated into the control valve device 21 shown in Fig. 2, will be described as part of a Comparative Example. The flow control valve 101 according to the Comparative Example variably controls the opening amount of a pilot throttle 56 (see Fig. 2) provided in a pilot valve 55 (see Fig. 2) to control the displacement amount of a main valve 102 such that the opening amount of a feedback throttle 103 provided in the main valve 102 corresponds to the opening amount of the pilot throttle 56 (see Fig. 2) . As a result, the opening amount of a main valve throttle 104 provided in the main valve 102 can be variably controlled to control the flow rate from an inlet side flow passage 105 to an outlet side flow passage 106 at a desired value.

For example, the pressure of a back pressure chamber 107 of the main valve 102 approaches the pressure of the inlet side flow passage 105 when the pilot valve 55 (see Fig. 2) varies as the opening amount of the pilot throttle 56 (see Fig. 2) becomes smaller. Thus, the resulting forces on the main valve 102 in the valve closing direction due to increases in the back pressure cause the main valve 102 to be displaced in the valve closing direction. Meanwhile, the resulting displacement of the main valve 102 in the valve closing direction decreases the opening amount of the feedback throttle 103, thereby allowing the pressure of the back pressure chamber 107 to approach the pressure of the outlet side flow passage 106, and decreases in the back pressure provide the main valve 102 with forces in the valve opening direction. As a result of the position feedback action, the main valve 102 stops at a position where "forces in the valve opening direction by the pressure of the inlet side flow passage 105 and the outlet side flow passage 106" and "forces in the valve closing direction by the back pressure and the spring 108" are equal.

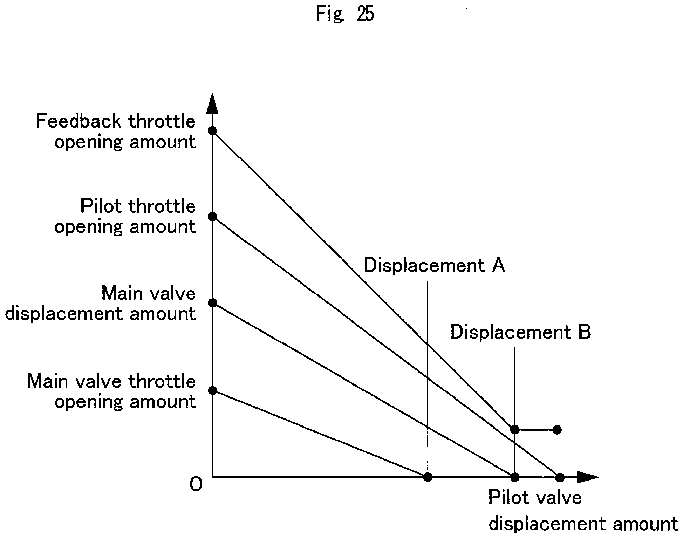

Fig. 25 is a characteristic diagram showing one example relationship between "the displacement amount of the pilot valve 55" and "the opening amount of the feedback throttle 103, the opening amount of the pilot throttle 56 and the displacement amount of the main valve 102 and the opening amount of the main valve throttle 104". As shown in Fig. 25, when the displacement amount of the pilot valve 55 changes from "0" to "Displacement A", the opening amount of the pilot throttle 56 decreases and thus the displacement amount of the main valve 102 and the opening amount of the main valve throttle 104 decrease as well, and the opening amount of the main valve throttle 104 reaches "0". Next, when the displacement amount of the pilot valve 55 changes from "Displacement A" to "Displacement B", the opening amount of the pilot throttle 56 further decreases, and thus the displacement amount of the main valve 102 decreases to "0". Fig. 24 shows the state of the main valve 102 when the displacement amount of the pilot valve 55 is at "Displacement B".

Herein, two operational problems can occur for a flow control valve configured to be controlled until the flow rate from the inlet side flow passage 105 to the outlet side flow passage 106 reaches 0, or the inlet side flow passage 105 and the outlet side flow passage 106 are shut off by the main valve 102 (the opening amount of the main valve throttle 104 reaches 0). These two problems will be described.

A first problem is that the proportional control range of the opening amount of the pilot throttle 56 includes the non-proportional control range of the opening amount of the main valve throttle 104 (between "Displacement A" and "Displacement B" in Fig. 25). In fact, the main valve throttle 104 cannot use this range to improve its proportional controllability by expanding the proportional control range of the opening amount. That is, the main valve 102 includes a seat portion 102A and a cylindrical portion 102B, as well as a tool clearance groove 102C therebetween. The tool clearance groove 102C is an essential part in a manufacturing process to ensure the dimension accuracy and surface roughness of the seat portion 102A and the cylindrical portion 102B. However, this range is a useless opening control range because an opening portion 104A of the main valve throttle 104 is shut off even by achieving proportional control of the displacement of the main valve 102. A possible measure to expand such a proportional control range is to increase the maximum displacement amount in the valve opening direction. Nevertheless, this measure can bring about larger parts' dimensions and higher manufacturing costs.

Subsequently, a second problem is that the main valve 102 is displaced from fluid forces to cause vibrational behavior near the displacement of the main valve 102 where the opening portion 104A of the main valve throttle 104 is switched between open and shut-off modes. That is, the direction of a jet flow passing through the main valve throttle 104 approaches the axial direction of the main valve 102 as the opening amount of the main valve throttle 104 approaches "0". As a result, fluid forces axially acting on the main valve 102 increase as the opening amount of the main valve throttle 104 approaches "0", thereby facilitating vibrational behavior. A possible measure to inhibit vibrational behavior is to increase the main valve 102 in size and reduce fluid forces relative to the pressure acting on the main valve 102. Nevertheless, this measure also brings about larger parts' dimensions and higher manufacturing costs.

It is an object of the present invention to provide a flow control valve capable of achieving high-precision flow control by expanding the proportional control range of the opening amount of a main valve throttle with respect to the proportional control range of the opening amount of a pilot throttle and inhibiting vibrational behavior of the displacement of a main valve from fluid forces near the displacement of the main valve where an opening portion of the main valve throttle is switched between open and shut-off modes.

An embodiment of the present invention provides a flow control valve including: a housing; a main valve chamber provided in the housing; a main valve slidably provided in the main valve chamber and having a valve portion; a main valve seat provided on one end side of the main valve chamber and communicating or shutting off hydraulic fluid by allowing the valve portion of the main valve to be separated from and seated on the main valve seat; an inlet side flow passage providing pressure in the direction away from the main valve seat for the main valve and introducing hydraulic fluid from the outside of the main valve chamber to the inside of the main valve chamber; an outlet side flow passage introducing hydraulic fluid from the inside of the main valve chamber to the outside of the main valve chamber when the main valve is separated from the main valve seat and providing pressure in the direction away from the main valve seat for the main valve; a back pressure chamber provided on other end side of the main valve chamber and providing pressure in the direction coming closer to the main valve seat for the main valve; a feedback flow passage provided in the main valve and communicating the inlet side flow passage and the back pressure chamber; a pilot flow passage provided in the housing and communicating the back pressure chamber and the outlet side flow passage; a main valve throttle provided in the main valve and increasing the opening amount between the inlet side flow passage and the outlet side flow passage as the main valve is displaced in the direction away from the main valve seat; a feedback throttle provided between the feedback flow passage and the back pressure chamber and increasing the opening amount between the feedback flow passage and the back pressure chamber as the main valve is displaced in the direction away from the main valve seat; a pilot valve slidably provided in the housing; and a pilot throttle provided in the pilot valve and decreasing or increasing the opening amount of the pilot flow passage as the pilot valve is displaced, characterized in that in the flow control valve having a flow rate control function variably controlling the flow rate from the inlet side flow passage to the outlet side flow passage by controlling the displacement amount of the main valve, depending on the opening amount of the pilot throttle, characterized in that the feedback throttle has at least one or more boundary portions that divide a section where the opening amount of the feedback throttle changes such that a ratio of change in the opening amount of the feedback throttle to a displacement of the main valve in the direction coming closer to the main valve seat becomes smaller, characterized in that at least one of the boundary portions is located in a displacement area of the main valve corresponding to a position where an opening portion of the main valve throttle is shut off with respect to the displacement in the direction coming closer to the main valve seat of the main valve, or in a displacement section closer to the main valve seat of the main valve than the displacement area.

The present invention can achieve high-precision flow control by expanding the proportional control range of the opening amount of a main valve throttle with respect to the proportional control range of the opening amount of a pilot throttle and inhibiting vibrational behavior of the displacement of a main valve from fluid forces near the displacement of the main valve where an opening portion of the main valve throttle is switched between open and shut-off modes.

### BRIEF DESCRIPTION OF THE DRAWINGS

Fig. 1 is an entire constitution diagram showing a flow control valve according to a first embodiment that is employed in a hydraulic circuit of a hydraulic excavator.
Fig. 2 is a longitudinal sectional view showing the flow control valve and a directional control valve in Fig. 1.
Fig. 3 is a longitudinal sectional view showing an enlarged (III) portion in Fig. 2.
Fig. 4 is a longitudinal sectional view showing a main valve that is open to a boundary portion where a ratio of change in the opening amount of a feedback throttle changes at the same position as in Fig. 3.
Fig. 5 is a longitudinal sectional view showing a main valve at a position that is fully open at the same position as in Fig. 3.
Fig. 6 is a perspective view showing a main valve (valve member).
Fig. 7 is a plan view showing the main valve (valve member) .
Fig. 8 is a plan view showing the main valve (valve member) that is rotated in a peripheral direction by 90 degrees from the state in Fig. 7.
Fig. 9 is a longitudinal sectional view showing the main valve (valve member), viewed along arrows IX-IX in Fig. 7.
Fig. 10 is a longitudinal sectional view showing the main valve (valve member), viewed along arrows X-X in Fig. 8.
Fig. 11 is a transverse sectional view showing the main valve (valve member), viewed along arrows XI-XI in Fig. 10.
Fig. 12 is a characteristic diagram showing one example relationship between the displacement amount of the pilot valve, the opening amount of the feedback throttle, the opening amount of the pilot throttle, the displacement amount of the main valve and the opening amount of the main valve throttle" according to the first embodiment.
Fig. 13 is a characteristic diagram showing one example relationship between the displacement of the main valve, the opening amount of the main valve throttle and the opening amount of the feedback throttle.
Fig. 14 is a perspective view showing a main valve (valve member) according to a second embodiment.
Fig. 15 is a plan view showing the main valve (valve member) according to the second embodiment.
Fig. 16 is a longitudinal sectional view showing the main valve (valve member), viewed along arrows XVI-XVI in Fig. 15.
Fig. 17 is a perspective view showing a cut feedback throttle according to the second embodiment.
Fig. 18 is a perspective view showing a main valve (valve member) according to a first modification.
Fig. 19 is a plan view showing the main valve (valve member) according to the first modification.
Fig. 20 is a longitudinal sectional view showing the main valve (valve member), viewed along arrows XX-XX in Fig. 19.
Fig. 21 is a perspective view showing a main valve (valve member) according to a second modification.
Fig. 22 is a plan view showing the main valve (valve member) according to the second modification.
Fig. 23 is a longitudinal sectional view showing the main valve (valve member), viewed along arrows XXIII-XXIII in Fig. 22.
Fig. 24 is a longitudinal sectional view showing a flow control valve according to a Comparative Example.
Fig. 25 is a characteristic diagram showing one example relationship between the displacement amount of the pilot valve, the opening amount of the feedback throttle, the opening amount of the pilot throttle, the displacement amount of the main valve and the opening amount of the main valve throttle" according to the Comparative Example.

### MODE FOR CARRYING OUT THE INVENTION

Hereinafter, a flow control valve according to one embodiment of the present disclosure will be described in detail with reference to the accompanying drawings, taking as an example of a case where the disclosure is applied to a hydraulic circuit of a hydraulic excavator.

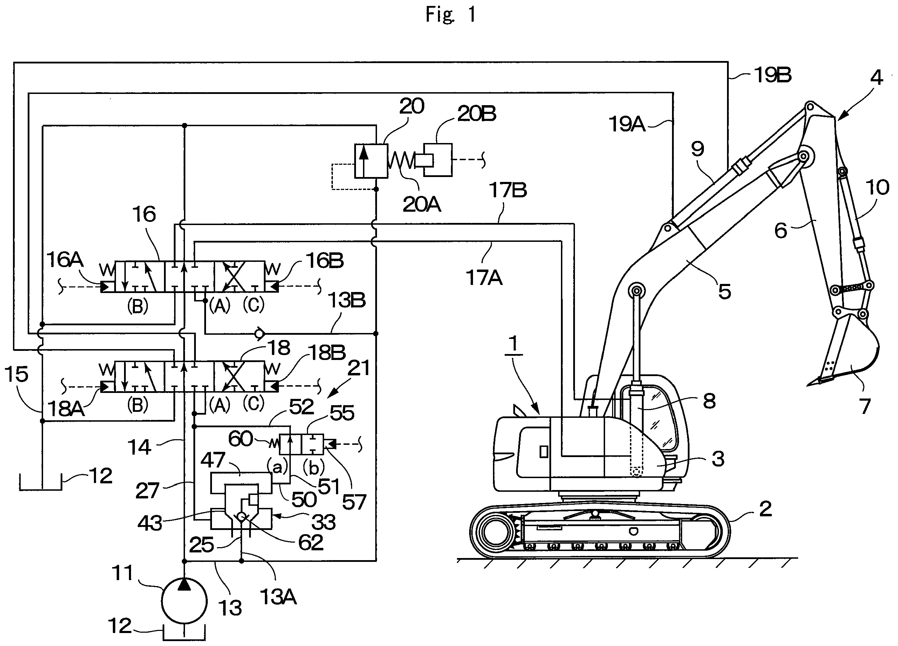

Figs. 1 to 13 illustrates a flow control valve according to a first embodiment of the present invention. In Fig. 1, a hydraulic excavator 1, as an exemplary construction machine, is configured to include a self-propelled crawler type lower traveling structure 2, an upper revolving structure 3 mounted rotatably on the lower traveling structure 2, and a working mechanism 4 composed of an articulated structure provided on a front side of the upper revolving structure 3 to be capable of moving upward/downward to perform excavating work. In this case, the lower traveling structure 2 and the upper revolving structure 3 constitute a vehicle body of the hydraulic excavator 1.

The working mechanism 4, called as "working device" or "front", is configured to include a boom 5, an arm 6, and a bucket 7 as a working tool. Also, the working mechanism 4 is configured to include a boom cylinder 8 as a hydraulic actuator (liquid pressure actuator) driving the boom 5, an arm cylinder 9 as a hydraulic actuator driving the arm 6, and a bucket cylinder 10 (working tool cylinder) as a hydraulic actuator driving the bucket 7. The working mechanism 4 moves upward/downward by allowing cylinders 8, 9, 10 as a hydraulic cylinder to extend or contract based upon pressurized oil supplied from a hydraulic pump 11. The hydraulic circuit shown in Fig. 1 is mainly for the boom cylinder 8 and the arm cylinder 9 to avoid complexity of graphic configuration.

The main hydraulic pump 11 mounted on the upper revolving structure 3 of the hydraulic excavator 1 constitutes a hydraulic pressure source together with a tank 12. The hydraulic pump 11 is rotatively driven by a prime mover such as a diesel engine (not shown), for example. The hydraulic pump 11 discharges (supplies) pressurized oil toward a pump line 13 and a center bypass line 14 by suctioning hydraulic oil in the tank 12. The pressurized oil discharged into the pump line 13 and the center bypass line 14 is supplied to the boom cylinder 8 through a directional control valve for boom 16, and supplied to the arm cylinder 9 through a directional control valve for arm 18. Additionally, for example, a tank line 15 for recirculating return oil from the boom cylinder 8 and the arm cylinder 9 to the tank 12 side is provided between the directional control valve for boom 16, the directional control valve for arm 18 and the tank 12.

Herein, branch lines 13A, 13B are provided on the way of the pump line 13. One branch line 13A is connected to a high pressure side port (that is, a later-described outlet side flow passage 27 in Fig. 2) in the directional control valve for arm 18 through a later-described flow control valve 33. The other branch line 13B is connected to a later-described high pressure side port in the directional control valve for boom 16. In fact, the pump line 13 and the tank line 15 are connected to the bucket cylinder 10 and the like through another branch line and another directional control valve (each not shown).

The directional control valve for boom 16 (hereafter also referred to as "control valve for boom 16") as the directional control valve for the boom cylinder 8 includes left and right hydraulic pilot portions 16A, 16B, and is normally held at a neutral position (A). The control valve for boom 16 is switched from the neutral position (A) to switching positions (B), (C) by supplying pilot pressure, for example, from a lever operating device for boom (not shown) as a hydraulic pilot type operating valve to the left and right hydraulic pilot portions 16A, 16B.

A pair of actuator lines 17A, 17B are provided between the boom cylinder 8 and the control valve for boom 16. One actuator line 17A connects a bottom side oil chamber (not shown) of the boom cylinder 8 to one pressurized oil outflow/inflow port of the control valve for boom 16. The other actuator line 17B connects a rod side oil chamber (not shown) of the boom cylinder 8 to the other pressurized oil outflow/inflow port of the control valve for boom 16.

A directional control valve for arm 18 (hereafter also referred to as "control valve for arm 18"), as a directional control valve for the arm cylinder 9, includes left and right hydraulic pilot portions 18A, 18B, and is normally held at a neutral position (A). The control valve for arm 18 is switched from the neutral position (A) to switching positions (B), (C) by supplying pilot pressure, for example, from a lever operating device for arm (not shown) as a hydraulic pilot type operating valve to the left and right hydraulic pilot portions 18A, 18B.

A pair of actuator lines 19A, 19B are provided between the arm cylinder 9 and the control valve for arm 18. One actuator line 19A connects a bottom side oil chamber (not shown) of the arm cylinder 9 to one pressurized oil outflow/inflow port (or an outflow/inflow passage 28B shown in Fig. 2) of the control valve for arm 18. The other actuator line 19B connects a rod side oil chamber (not shown) of the arm cylinder 9 to the other pressurized oil outflow/inflow port (or an outflow/inflow passage 28A shown in Fig. 2) of the control valve for arm 18.

When the control valve for arm 18 is switched from the neutral position (A) to the switching position (B), pressurized oil from the hydraulic pump 11 is supplied to the bottom side oil chamber of the arm cylinder 9 through the branch line 13A, a later-described flow control valve 33, the control valve for arm 18, and the actuator line 19A. The pressurized oil in the rod side oil chamber is discharged into the tank 12 through the actuator line 19B, the control valve for arm 18, and the tank line 15. As a result, the arm cylinder 9 extends by the pressurized oil supplied to the bottom side oil chamber to rotate the arm 6 downward.

When the control valve for arm 18 is switched from the neutral position (A) to the switching position (C), pressurized oil from the hydraulic pump 11 is supplied to the rod side oil chamber of the arm cylinder 9 through the branch line 13A, a flow control valve 33, the control valve for arm 18, and the actuator line 19B. The pressurized oil in the bottom side oil chamber is discharged into the tank 12 through the actuator line 19A, the control valve for arm 18, and the tank line 15. As a result, the arm cylinder 9 contracts by the pressurized oil supplied to the rod side oil chamber to rotate the arm 6 upward.

A relief valve 20 is a set pressure variable type relief valve. The relief valve 20 is provided between the pump line 13, the center bypass line 14, and the tank line 15. The relief valve 20 opens, for example, when the pressure of the pump line 13 increases to the set pressure or more, and the resulting excessive pressure is relieved to the tank line 15 side. The relief valve 20 includes a pressure setting spring 20A and a pilot oil chamber 20B, and the like, and the set pressure of the pressure setting spring 20A changes according to pilot pressure supplied to the pilot oil chamber 20B from the outside. As a result, the relief valve 20 is configured to be able to control the relief set pressure at two stages between the low pressure setting and the high pressure setting or at three or more multistage.

A control valve device 21 is configured to include the control valve for arm 18 and a later-described flow control valve 33. As shown in Fig. 2, the control valve device 21 includes a housing 22 that is common to the control valve for arm 18 and the flow control valve 33. In this case, the housing 22 is configured to include a main housing 23 accommodating a spool 29 of the control valve for arm 18 and a main valve 43 of the flow control valve 33, and a pilot housing 36 accommodating the main valve 43 of the flow control valve 33 and a pilot valve 55. The main housing 23 and the pilot housing 36 are separately formed as a distinct part. Mounting of the pilot housing 36 on the main housing 23 allows for configuration of one housing 22.

Subsequently, the control valve for arm 18 of the control valve device 21 will be described. Fig. 2 shows the control valve for arm 18 at a neutral position (A).

The control valve for arm 18 is a spool valve device controlling the direction of pressurized oil supplied from the hydraulic pump 11 to the arm cylinder 9. The control valve for arm 18 is configured to include the main housing 23, a spool sliding bore 24, an inlet side flow passage 25, an outlet side flow passage 27, a pair of outflow/inflow passages 28A, 28B, the spool 29, left and right lid members 30A, 30B, a stopper 31, and a spring 32. The main housing 23 constitutes the housing 22 of the control valve device 21 together with the pilot housing 36. The spool sliding bore 24, the inlet side flow passage 25, the outlet side flow passage 27, and the pair of outflow/inflow passages 28A, 28B are formed in the main housing 23.

The spool sliding bore 24 linearly extends by penetrating in the right-and-left direction of the main housing 23 (in the right-and-left direction in Fig. 2, or in the axial direction where a later-described spool 29 slides). First annular oil grooves 24A, 24B, second annular oil grooves 24C, 24D, and third annular oil grooves 24E, 24F are formed on the peripheral wall side of the spool sliding bore 24. The First annular oil grooves 24A, 24B are provided to be separated to each other in the right-and-left direction on the central side in the axial direction of the spool sliding bore 24. The second annular oil grooves 24C, 24D are provided to be separated to each other in the right-and-left direction at a position more outside of the axial direction of the spool sliding bore 24 than the First annular oil grooves 24A, 24B. The third annular oil grooves 24E, 24F are provided to be separated to each other in the right-and-left direction at a position more outside of the axial direction of the spool sliding bore 24 than the second annular oil grooves 24C, 24D.

The First annular oil grooves 24A, 24B communicate with each other by the outlet side flow passage 27 formed overall in an inverted U-shaped. The First annular oil grooves 24A, 24B are communicated or shut off relative to the second annular oil grooves 24C, 24D when the spool 29 is displaced in the right-and-left direction from a neutral position shown in Fig. 2. The second annular oil grooves 24C, 24D normally communicate with the pair of actuator lines 19A, 19B via the left and right outflow/inflow passages 28A, 28B. The third annular oil grooves 24E, 24F normally communicate with the tank 12 via each tank line 15. The third annular oil grooves 24E, 24F are communicated or shut off relative to the second annular oil grooves 24C, 24D when the spool 29 is displaced in the right-and-left direction from the neutral position shown in Fig. 2.

The inlet side flow passage 25 is provided at a position separated in the radial direction from the spool sliding bore 24. In this case, the inlet side flow passage 25 extends along the direction perpendicular to the spool sliding bore 24 (in a front-and-rear direction in Fig. 2) . The inlet side flow passage 25 is connected to the hydraulic pump 11 through the pump line 13 (more specifically, the branch line 13A) . The outlet side flow passage 27 crosses the inlet side flow passage 25 at a position of the communicating hole 26, and extends overall in an inverted U-shaped. The outlet side flow passage 27 communicates the First annular oil grooves 24A, 24B separated each other and provided.

The communicating hole 26 is disposed at a position opposite to a later-described valve sliding bore 34 by interposing the outlet side flow passage 27. The communicating hole 26 is communicated such that the inlet side flow passage 25 is across the outlet side flow passage 27. The communicating hole 26 constitutes the main valve chamber 42 together with a later-described valve sliding bore 34 and a recessed portion 37 of the pilot housing 36. A tapered main valve seat 46, as an annular valve seat which a later-described main valve 43 is separated from and seated on, respectively, is provided at an intersecting portion between the outlet side flow passage 27 and the communicating hole 26.

A pair of outflow/inflow passages 28A, 28B are provided to be separated in the right-and-left direction of the main housing 23 so as to interpose the outlet side flow passage 27 and the valve sliding bore 34. The pair of outflow/inflow passages 28A, 28B constitute pressurized oil outflow/inflow ports of the control valve for arm 18. That is, the pair of outflow/inflow passages 28A, 28B are connected to (a rod side oil chamber, a bottom side oil chamber of) the arm cylinder 9 through the actuator lines 19A, 19B.

The spool 29 is inserted to the spool sliding bore 24 of the main housing 23. The spool 29 is slidingly displaced in the right-and-left direction in the spool sliding bore 24 according to pilot pressure supplied to the hydraulic pilot portions 18A, 18B from the outside. As a result, the control valve for arm 18 shown in Fig. 1 is switched from the neutral position (A) to left and right switching positions (B), (C).

As shown in Fig. 2, the spool 29 includes switching lands 29A, 29B allowing the second annular oil grooves 24C, 24D to selectively communicate with or shut off either one of the First annular oil grooves 24A, 24B or the third annular oil grooves 24E, 24F. A plurality of notches 29A1, 29B1 finely controlling the flow rate of pressurized oil is formed circumferentially to be separated each other on the switching lands 29A, 29B.

Herein, the switching land 29A of the spool 29 communicates the first annular oil groove 24A with the second annular oil groove 24C when the spool 29 is slidingly displaced in the left direction in Fig. 2. In addition to that, the switching land 29B of the spool 29 shuts off the first annular oil groove 24B to the second annular oil groove 24D, and communicates the second annular oil groove 24D with the third annular oil groove 24F. As a result, the control valve for arm 18 is switched from the neutral position (A) shown in Fig. 1 to the right switching position (C).

Meanwhile, the switching land 29B of the spool 29 communicates the first annular oil groove 24B with the second annular oil groove 24D when the spool 29 is slidingly displaced in the right direction in Fig. 2. In addition to that, the switching land 29A of the spool 29 shuts off the first annular oil groove 24A to the second annular oil groove 24C, and communicates the second annular oil groove 24C with the third annular oil groove 24E. As a result, the control valve for arm 18 is switched from the neutral position (A) shown in Fig. 1 to the left switching position (B).

Left and right lid members 30A, 30B constitute the control valve for arm 18 together with the spool 29. The lid members 30A, 30B are mounted on the main housing 23 located on both sides in the axial direction (in the right-and-left direction) of the spool sliding bore 24. The lid members 30A, 30B close both end sides of the spool sliding bore 24. The right side lid member 30B is formed longer than the left side lid member 30A, and a spring 32 for centering is provided in the right side lid member 30B. The hydraulic pilot portions 18A, 18B are provided inside the lid members 30A, 30B. Pilot pressure is supplied to the hydraulic pilot portions 18A, 18B from an operating valve (lever operating device) . The spool 29 of the control valve for arm 18 is slidingly displaced in the right-and-left direction in Fig. 2 in the spool sliding bore 24 according to the pilot pressure.

The stopper 31 is provided integrally with the spool 29 on the right side of the spool 29. The stopper 31 is displaceably disposed in the lid member 30B, and includes a shaft portion 31A extending in the axial direction in the lid member 30B. The stopper 31 restricts the stroke end of the spool 29 when the spool 29 is displaced in the right direction in Fig. 2.

The spring 32 is a spring for centering holding the spool 29 at a neutral position. The spring 32 is disposed in the state where it is located on an outer peripheral side of a shaft portion 31A of the stopper 31 and initial load is provided between an end surface of the spool 29 and the stopper 31 beforehand. The spring 32 holds the spool 29 at the neutral position when pilot pressure from the hydraulic pilot portions 18A, 18B declines to the tank pressure level.

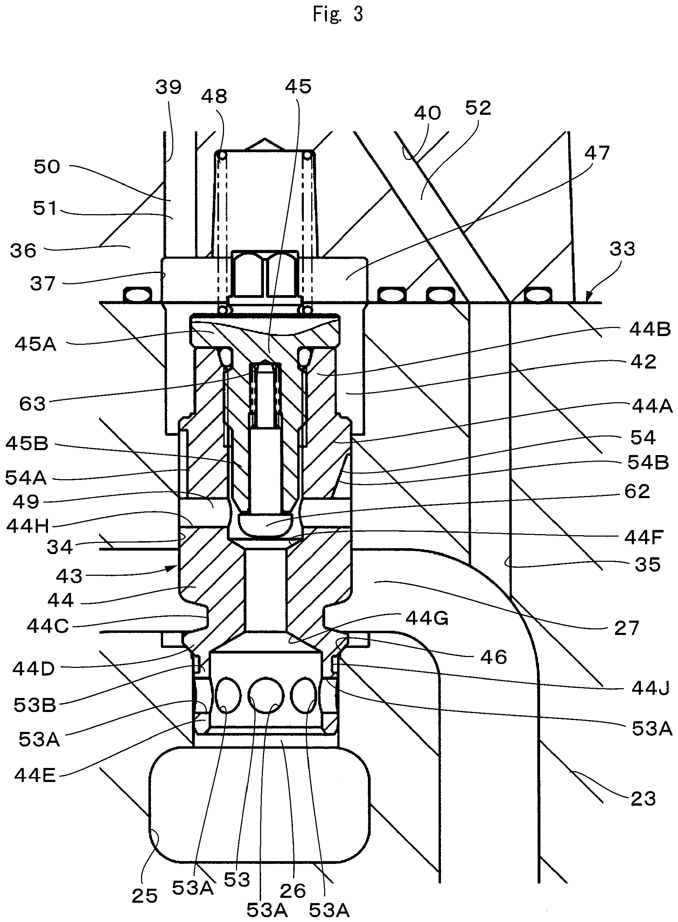

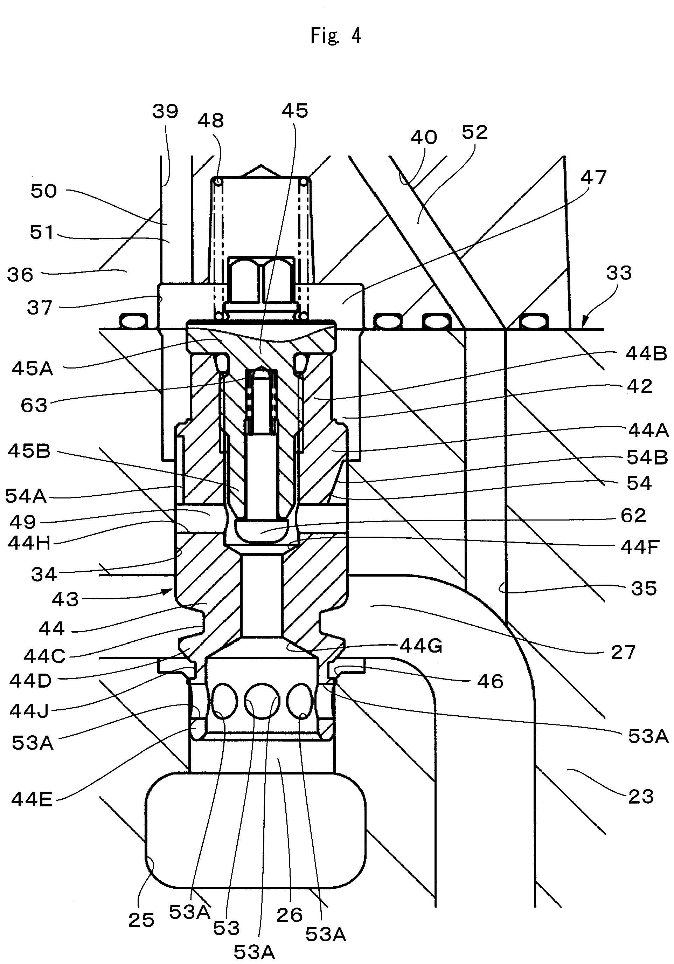

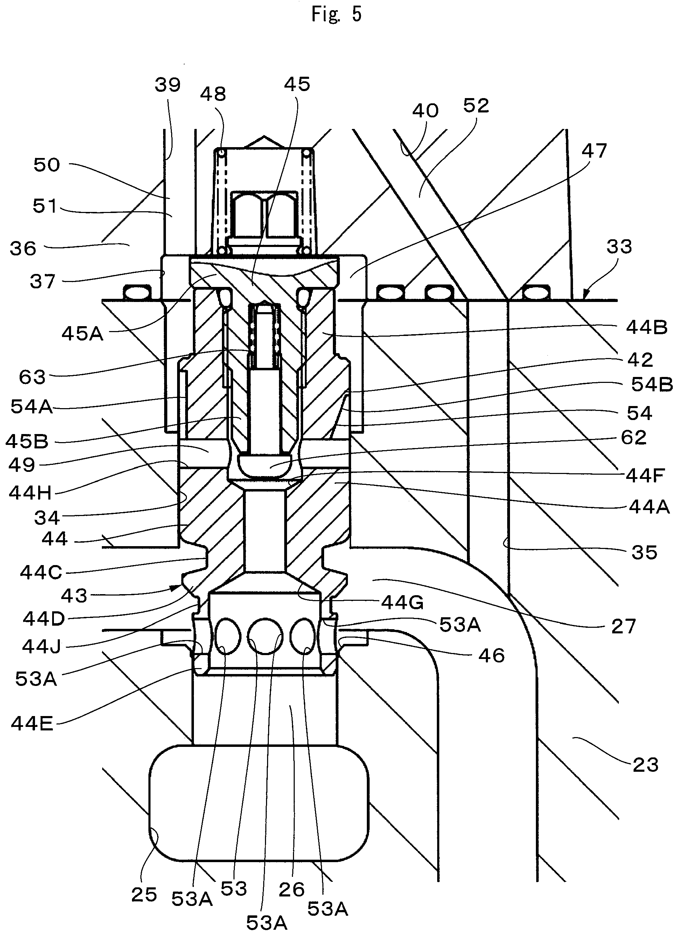

Subsequently, the flow control valve 33 of the control valve device 21 will be described. Figs. 2 and 3 show that the main valve 43 is closed, and Figs. 4 and 5 show that the main valve 43 is open. Fig. 5 shows that the main valve 43 is most open with the maximum flow rate.

The flow control valve 33 is a poppet valve device controlling the flow rate of pressurized oil supplied to the arm cylinder 9. The flow control valve 33 according to the first embodiment is a seat valve type flow control valve. The flow control valve 33 includes the housing 22, the main valve chamber 42, the main valve 43, the main valve seat 46, the inlet side flow passage 25, the outlet side flow passage 27, a back pressure chamber 47, a feedback flow passage 49, a pilot flow passage 50, a main valve throttle 53, a feedback throttle 54, the pilot valve 55, and a pilot throttle 56.

The housing 22 is configured by the main housing 23 and the pilot housing 36. That is, the main housing 23 constitutes a housing 22 of the flow control valve 33 together with the pilot housing 36. The valve sliding bore 34 and a branch passage 35 are formed on the main housing 23, in addition to the inlet side flow passage 25, the communicating hole 26, and the outlet side flow passage 27.

The valve sliding bore 34 is disposed to be opposite to the inlet side flow passage 25 by interposing the communicating hole 26 and the outlet side flow passage 27, and formed as a stepped hole. The valve sliding bore 34 extends along the direction perpendicular to spool sliding bore 24 (in the vertical direction in Fig. 2) between the pilot housing 36 and the outlet side flow passage 27. The valve sliding bore 34 constitutes the main valve chamber 42 together with the communicating hole 26 and the recessed portion 37 of the pilot housing 36. The main valve 43 is displaceably inserted (fitted) within the main valve chamber 42.

The branch passage 35 is an oil passage branched off on the way of the outlet side flow passage 27. The branch passage 35 normally communicates with the second passage 40 on the pilot housing 36 side. The branch passage 35 constitutes the pilot flow passage 50 together with the second passage 40 and the first passage 39 as another passage provided in the pilot housing 36.

The pilot housing 36 constitutes a housing 22 of the flow control valve 33 together with the main housing 23. The pilot housing 36 is provided on an outer side surface of the main housing 23 so as to close the valve sliding bore 34 of the main housing 23 from the outside. The recessed portion 37 accommodating a later-described main valve 43 and a valve spring 48, a valve accommodating bore 38 accommodating a later-described pilot valve 55 and the like, the first passage 39 communicating the valve accommodating bore 38 and the recessed portion 37, the second passage 40 extending to be diagonally inclined between the branch passage 35 of the main housing 23 and the valve accommodating bore 38 and communicating with or shutting off the first passage 39 by the pilot valve 55, and a supply/discharge port 41 of pilot pressure are provided in the pilot housing 36. The supply/discharge port 41 is connected to a later described pilot chamber 57 defined by an inner surface of the valve accommodating bore 38 and the pilot valve 55.

The main valve chamber 42 is provided in the housing 22. That is, the main valve chamber 42 is configured by the valve sliding bore 34 and the communicating hole 26 of the main housing 23 and the recessed portion 37 of the pilot housing 36 to accommodate the main valve 43 therein. As a result, the main valve chamber 42 is provided both in the main housing 23 and the pilot housing 36.

The main valve 43 is slidably provided in the main valve chamber 42. The main valve 43 is a valve body of the flow control valve 33, and includes a seat portion 44D as a valve portion. In this case, the main valve 43 is configured to include a stepped valve member 44 inserted within the valve sliding bore 34, and a valve-holding member 45 provided threadedly engaged with one side in the axial direction of the valve member 44 and displaceably holding a later-described check valve 62 with the valve member 44. The valve-holding member 45 is configured to include a spring receiving portion 45A supporting the valve spring 48 with (a bottom portion of) the recessed portion 37 of the pilot housing 36 in a contracting state, and a holding cylinder portion 45B displaceably holding a check valve 62 therein formed in a bottomed cylinder and screwed into the valve member 44 (on an upper portion side of a later-described stepped hole portion 44G). The check valve 62 and the spring 63 are accommodated inside the holding cylinder portion 45B. The valve-holding member 45, while accommodating the check valve 62 and the spring 63, is mounted so as to be threadedly engaged with the valve member 44 of the main valve 43.

The valve member 44 is configured to include a large-diameter portion 44A slidably inserted within the valve sliding bore 34, a small diameter cylinder portion 44B provided on one side in the axial direction of the large-diameter portion 44A, a seat portion 44D integrally formed through a smaller reduced diameter portion 44C on the other side in the axial direction of the large-diameter portion 44A and whose outer peripheral side is separated from and seated on the main valve seat 46 of the main housing 23, and a cylindrical portion 44E projecting in the axial direction toward the inlet side flow passage 25 from the other side of the seat portion 44D (on a tip end side). In this case, the seat portion 44D as a seat portion is provided in the main valve 43 (valve member 44). The seat portion 44D contacts with (is seated on) the main valve seat 46 to block the flow of the hydraulic fluid between the inlet side flow passage 25 and the outlet side flow passage 27.

Also, a stepped hole portion 44G extending toward one side (upper side) in the axial direction from an inner peripheral side of the cylindrical portion 44E to the reduced diameter portion 44C, the large-diameter portion 44A to the small diameter cylinder portion 44B and of which a valve seat 44F for a check valve 62 is formed on the way, a radial hole 44H extending in the radial direction of the stepped hole portion 44G, and a later-described feedback throttle 54 are provided on the valve member 44. The stepped hole portion 44G communicates with the inlet side flow passage 25 through an inner peripheral side of the cylindrical portion 44E. The radial hole 44H communicates with a later-described back pressure chamber 47 through the feedback throttle 54. As a result, the stepped hole portion 44G and the radial hole 44H constitute the feedback flow passage 49. A later-described main valve throttle 53 is provided at the cylindrical portion 44E of the valve member 44.

The main valve seat 46 is provided on one end side of the main valve chamber 42 (on the inlet side flow passage 25 side). That is, the main valve seat 46 is provided at an intersecting portion between the outlet side flow passage 27 and the communicating hole 26 in the main housing 23, and configured as a tapered annular valve seat. The main valve seat 46 communicates or shuts off hydraulic fluid by the seat portion 44D of the main valve 43 that is separated from and seated on the valve seat.

The inlet side flow passage 25 is provided in the main housing 23, and connected to a discharge side of the hydraulic pump 11. The inlet side flow passage 25 applies pressure to the main valve 43 in the direction (valve opening direction) away from the main valve seat 46 based upon the pressurized oil (hydraulic fluid) supplied from the hydraulic pump 11. In addition to that, the inlet side flow passage 25 introduces hydraulic fluid from the outside of the main valve chamber 42 (on the hydraulic pump 11 side) to the inside of the main valve chamber 42. The inlet side flow passage 25 is facing the main valve seat 46.

The outlet side flow passage 27 is provided in the main housing 23, and connected to the spool sliding bore 24 of the control valve for arm 18. The outlet side flow passage 27 introduces hydraulic fluid from the inside of the main valve chamber 42 (on the communicating hole 26 side) to the outside of the main valve chamber 42 (on the spool sliding bore 24 side of the control valve for arm 18, more specifically on the arm cylinder 9 side) when the main valve 43 is separated from the main valve seat 46. In addition to that, the outlet side flow passage 27 applies pressure to the main valve 43 in the direction (valve opening direction) away from the main valve seat 46. The outlet side flow passage 27 is also facing the main valve seat 46. The inlet side flow passage 25 and the outlet side flow passage 27 applies pressure to the main valve 43 in the valve opening direction.

The back pressure chamber 47 is provided on the other end side of the main valve chamber 42 (opposite to the inlet side flow passage 25) . The back pressure chamber 47 applies pressure to the main valve 43 in the direction coming closer to the main valve seat 46 (valve closing direction). That is, the back pressure chamber 47 is a control pressure chamber variably controlling the displacement amount of the main valve 43 (lift amount), and is formed between the recessed portion 37 of the pilot housing 36 and the main valve 43. The back pressure chamber 47 normally communicates with the first passage 39 of the pilot housing 36.

A valve spring 48 is provided in the back pressure chamber 47. That is, the valve spring 48 is located in the back pressure chamber 47 and disposed between (the valve-holding member 45 of) the main valve 43 and (a bottom portion of) the recessed portion 37 of the pilot housing 36. The valve spring 48 is configured using a coil spring or the like, and normally urges the valve member 44 through the valve-holding member 45 in the valve closing direction. That is, the valve spring 48 normally urges the main valve 43 (valve-holding member 45) in the valve closing direction. The main valve 43 is also pressed in the valve closing direction by back pressure generated in the back pressure chamber 47 (control pressure).

The feedback flow passage 49 is provided inside the main valve 43. That is, the feedback flow passage 49 is configured by the stepped hole portion 44G and the radial hole 44H of the main valve 43 (valve member 44). In this case, the radial hole 44H communicates with the back pressure chamber 47 through the feedback throttle 54. As a result, the feedback flow passage 49 communicates the inlet side flow passage 25 with the back pressure chamber 47.

The pilot flow passage 50 is provided in the housing 22 (the main housing 23 and the pilot housing 36) . That is, the pilot flow passage 50 is configured by the branch passage 35 of the main housing 23, and the first passage 39 and the second passage 40 of the pilot housing 36. As a result, the pilot flow passage 50 communicates the back pressure chamber 47 with the outlet side flow passage 27. In this case, the first passage 39 constitutes a pilot throttle upstream line 51 as a line on an upstream side of a pilot throttle 56. The second passage 40 and the branch passage 35 constitute a pilot throttle downstream line 52 as a line on a downstream side of the pilot throttle 56.

The main valve throttle 53 is provided on a tip end side (on the inlet side flow passage 25 side) of the main valve 43 (more specifically, the valve member 44) . As described later, the main valve throttle 53 is configured by a lateral hole 53A and a fixed throttle 53B. The main valve throttle 53 increases the opening amount between the inlet side flow passage 25 and the outlet side flow passage 27 according to the displacement in the direction away from the main valve seat 46 of the main valve 43 (the displacement toward an upper side in the vertical direction in Figs. 2 to 5).

The feedback throttle 54 is provided between the feedback flow passage 49 and the back pressure chamber 47. The feedback throttle 54 is provided as a variable throttle on an outer peripheral surface side of the main valve 43 (the large-diameter portion 44A of the valve member 44). The feedback throttle 54 increases the opening amount between the feedback flow passage 49 and the back pressure chamber 47 according to the displacement in the direction away from the main valve seat 46 of the main valve 43 (in the valve opening direction).

As shown in Fig. 2, the pilot valve 55 is slidably provided in the housing 22 (pilot housing 36). That is, the pilot valve 55 is provided slidably inserted (fitted) within the valve accommodating bore 38 of the pilot housing 36. The pilot valve 55 is configured as a spool valve body including the pilot throttle 56. The pilot valve 55 is displaced by introducing hydraulic fluid into the pilot chamber 57 and pressurizing the same. The hydraulic fluid inside a later-described drain chamber 59 is discharged by a drain port 59A according to the displacement of the pilot valve 55. The pilot chamber 57 and the drain chamber 59 are provided in the pilot housing 36.

The pilot throttle 56 is provided in the pilot valve 55. That is, the pilot throttle 56 is provided as a variable throttle on an outer peripheral surface side of the pilot valve 55. The pilot throttle 56 decreases the opening amount of the pilot flow passage 50 according to the displacement of the pilot valve 55. That is, the pilot throttle 56 decreases the opening amount of the pilot flow passage 50 as the pilot valve 55 travels to one side in the axial direction (on the right side in the right-and-left direction in Fig. 2) according to pressurized oil (pilot pressure) supplied to the pilot chamber 57. In this case, the pilot throttle 56 is configured as a notch that is deeper toward one side in the axial direction (away from the pilot chamber 57) . In this case, the pilot throttle may be configured as a notch with constant depth.

A lid member 58 is located on one side in the axial direction of the valve accommodating bore 38 and mounted so as to be threadedly engaged with the pilot housing 36. The lid member 58 closes one side of the valve accommodating bore 38 to define a drain chamber (spring chamber) 59 on one side of the pilot valve 55. A spring 60 is provided between the lid member 58 and the pilot valve 55 in a contracting state. The spring 60 urges the pilot valve 55 via a washer 61 in the valve opening direction. That is, the washer 61 in contact with the pilot valve 55 and the spring 60 for urging the pilot valve 55 via the washer 61 in the valve opening direction are provided on the drain chamber 59. The lid member 58 to be threadedly engaged with the pilot housing 36 is configured to urge the spring 60.

The pilot valve 55, when it is disposed at a communication position (a) shown in Fig. 1 by the spring 60, communicates the first and second passages 39, 40 as the pilot flow passage 50 via the pilot throttle 56. At this time, the back pressure chamber 47 of the main valve 43 communicates with the outlet side flow passage 27 via the first and second passages 39, 40 and the branch passage 35 on the main housing 23 side to maintain the pressure that is equal to that of the outlet side flow passage 27. As a result, the main valve 43 is opened to the full-open position.

Meanwhile, the pilot valve 55 is slidingly displaced against the spring 60 when the pilot pressure, as external instruction pressure supplied to the pilot chamber 57 via the supply/discharge port 41 from a remote operating valve for external instruction (not shown), rises up to a predetermined pressure value or more, to shut off the first and second passages 39, 40. As a result, the pilot valve 55 is switched against the spring 60 from the communication position (a) to the blockade position (b) shown in Fig. 1. At this time, the back pressure chamber 47 of the main valve 43 is communicated with the second passage 40 (outlet side flow passage 27) with the minimum opening amount. As a result, the main valve 43 is opened at a minimum-open position.

The check valve 62 is provided in the feedback flow passage 49. That is, the check valve 62 is accommodated between the valve member 44 and the valve-holding member 45. The check valve 62 is slidably inserted within the holding cylinder portion 45B of the valve-holding member 45, and is urged by the spring 63 so as to normally be seated on the valve seat 44F of the valve member 44. That is, the spring 63 for the check valve urges the check valve 62 in the valve closing direction. The check valve 62 allows for flow of hydraulic fluid from the inlet side flow passage 25 to the back pressure chamber 47 to block (shut off) its opposite flow. That is, the check valve 62 is opened so as to be separated from the valve seat 44F against the spring 63 when the pressure from the cylindrical portion 44E side of the valve member 44 acts on the inlet side flow passage 25.

As a result, pressurized oil in the inlet side flow passage 25 is supplied to the back pressure chamber 47 via the stepped hole portion 44G and the radial hole 44H of the valve member 44 and the feedback throttle 54. As a result, the check valve 62 allows for circulation of pressurized oil from the inlet side flow passage 25 in the main valve 43 toward the back pressure chamber 47 to block an opposite flow. That is, the check valve 62 blocks circulation of an oil liquid in the back pressure chamber 47 toward the stepped hole portion 44G and the inlet side flow passage 25 via the radial hole 44H of the valve member 44 and the like. The check valve 62 shut off back flow from the outlet side flow passage 27 to the inlet side flow passage 25 together with the seat portion 44D of the main valve 43.

The flow control valve 33 thus configured includes a function of controlling the flow rate and a function of load check. That is, the flow control valve 33 includes a function of controlling the flow rate variably controlling the flow rate from the inlet side flow passage 25 to the outlet side flow passage 27 (flow rate of pressurized oil circulating in the control valve for arm 18) by controlling the displacement amount (lift amount, or opening area) of the main valve 43 according to the opening amount of the pilot throttle 56. In addition to that, the flow control valve 33 includes a function of load check blocking a flow of hydraulic fluid (oil liquid) from the outlet side flow passage 27 to the inlet side flow passage 25 by the main valve 43 and the check valve 62 when the pressure of the inlet side flow passage 25 is lower than the pressure of the outlet side flow passage 27.

Subsequently, the cylindrical portion 44E of the main valve 43 will be described.

That is, the cylindrical portion 44E located on the inlet side flow passage 25 side as a tip end side is provided in the main valve 43. In other words, the valve member 44 of the main valve 43 has the cylindrical portion 44E on the tip end side. The main valve throttle 53 is provided at the cylindrical portion 44E. Also, a tool clearance groove 44J is provided on a base end side (seat portion 44D side) of the cylindrical portion 44E. That is, the tool clearance groove 44J is provided at a connection between the cylindrical portion 44E and the seat portion 44D, in other words, between the seat portion 44D and the cylindrical portion 44E. The tool clearance groove 44J functions as a working tool clearance groove required for securing dimension accuracy between the seat portion 44D and the cylindrical portion 44E and surface roughness.

The main valve throttle 53 controls the flow rate of pressurized oil flowing from the inlet side flow passage 25 to the outlet side flow passage 27 through the communicating hole 26 (opening area of the communicating hole 26 to the outlet side flow passage 27) according to the displacement in the axial direction of the main valve 43 (displacement in the vertical direction in Figs. 2 to 5). The main valve throttle 53 is configured by a plurality of (e.g., 8) lateral holes 53A and a plurality of (e.g., 4) fixed throttles 53B.

The lateral hole 53A is provided at the cylindrical portion 44E of the main valve 43. The lateral hole 53A extends in the radial direction of the main valve 43 (in the direction perpendicular to the center axis of the main valve 43). That is, the lateral hole 53A is formed at the cylindrical portion 44E as a through hole penetrating between an outer peripheral side and an inner peripheral side of the cylindrical portion 44E. The fixed throttle 53B is located closer to the seat portion 44D side than the lateral hole 53A, and provided at the cylindrical portion 44E of the main valve 43. The fixed throttle 53B extends in the radial direction of the main valve 43 (in the direction perpendicular to the center axis of the main valve 43), and is formed at the cylindrical portion 44E as a throttle hole that is smaller than the lateral hole 53A.

That is, the fixed throttle 53B also penetrates between the outer peripheral side and the inner peripheral side of the cylindrical portion 44E, as well as the lateral hole 53A. The fixed throttle 53B is provided at a position corresponding to the tool clearance groove 44J. This configuration allows the fixed throttle 53B to be open through the tool clearance groove 44J. The lateral hole 53A and the fixed throttle 53B communicate the inlet side flow passage 25 with the outlet side flow passage 27 through the inside of the main valve 43 (more specifically, the inside of the cylindrical portion 44E).

Subsequently, the feedback throttle 54 will be described.

The feedback throttle 54 is provided at the valve member 44 of the main valve 43. The flow control valve according to the first embodiment is configured by expanding the proportional control range of the opening amount of the main valve throttle 53 with respect to the proportional control range of the opening amount of a pilot throttle 56 and inhibiting vibrational behavior of the displacement of the main valve 43 from fluid forces near the displacement of the main valve 43 where an opening portion of the main valve throttle 53 (lateral hole 53A) is switched between open and shut-off modes. To this end, as shown in Figs. 2 to 11, the feedback throttle 54 is configured by a small-change throttle 54A where a ratio of change in the opening amount to the displacement amount of the main valve 43 is small and a large-change throttle 54B where the ratio of change in the opening amount is large. The details of the feedback throttle 54 will be described later.

The control valve device 21 including the flow control valve 33 according to a first embodiment is configured as above, and subsequently its operation will be described.

First, the pressurized oil discharged from the hydraulic pump 11 circulates from the branch line 13A of the pump line 13 to the inlet side flow passage 25 of the main housing 23, and between the main valve 43 of the flow control valve 33 and the communicating hole 26 (main valve throttle 53) to travel to the outlet side flow passage 27. The pressurized oil traveling to the outlet side flow passage 27 is supplied to and discharged from the arm cylinder 9 via a pair of actuator lines 19A, 19B by switching the control valve for arm 18 from a neutral position (A) to a switching position (B) or (C) .

The flow rate of the pressurized oil supplied to the arm cylinder 9 is determined by the opening area at the main valve 43 of the flow control valve 33 and the opening area by the spool 29 (switching lands 29A, 29B) of the control valve for arm 18. The main valve 43 of the flow control valve 33 shuts off both passages 25, 27 by allowing the seat portion 44D to be seated on the main valve seat 46 of the main housing 23 when the flow of the pressurized oil from the inlet side flow passage 25 of the main housing 23 toward the outlet side flow passage 27 is blocked.

Herein, the supply of the pilot pressure to the pilot chamber 57 of the pilot valve 55 pressurizes the pilot chamber 57 to displace the pilot valve 55 in the right direction in Fig. 2 when the flow rate from the inlet side flow passage 25 to the outlet side flow passage 27 is variably controlled. As a result, the opening amount of the pilot throttle 56 of the pilot valve 55 is variably controlled. Then, a flow occurs from the inlet side flow passage 25 to the outlet side flow passage 27, for example, when the pressure of the inlet side flow passage 25 is higher than the outlet side flow passage 27. At this time, a flow occurs from the inlet side flow passage 25 to the check valve 62, the feedback throttle 54 to the back pressure chamber 47, and another flow occurs from the back pressure chamber 47 to the pilot throttle upstream line 51, the pilot throttle 56, the pilot throttle downstream line 52 to the outlet side flow passage 27.

Herein, since the opening amount of the feedback throttle 54 is large when the displacement amount in the valve opening direction of the main valve 43 is larger than the opening amount of the pilot throttle 56 as the opening amount between the back pressure chamber 47 and the outlet side flow passage 27, the pressure of the back pressure chamber 47 approaches to the pressure of the inlet side flow passage 25. As a result, the main valve 43 is displaced in the valve closing direction from forces in the valve closing direction by the pressure of the back pressure chamber 47. The resulting decreases in the opening amount of the feedback throttle 54 according to the displacement of the main valve 43 reduce the pressure of the back pressure chamber 47 and forces in the valve closing direction by the pressure of the back pressure chamber 47 on the main valve 43.

As a result of the position feedback action, the main valve 43 stops at a position where "forces in the valve opening direction by the pressure of the inlet side flow passage 25 and the outlet side flow passage 27" and "forces in the valve closing direction of the pressure of the back pressure chamber 47 and the valve spring 48" are equal. As a result, the displacement amount of the main valve 43 is controlled such that the opening amount of the feedback throttle 54 corresponds to the opening amount of the pilot throttle 56 variably controlled. In accordance therewith, the flow rate from the inlet side flow passage 25 to the outlet side flow passage 27 can variably be controlled by controlling the opening amount of the main valve throttle 53.

Meanwhile, the pilot chamber 57 is pressurized to be the maximum pressure, the pilot valve 55 is displaced to be the maximum displacement amount, and the opening amount of the pilot throttle 56 is controlled to be the minimum when the flow rate from the inlet side flow passage 25 to the outlet side flow passage 27 is controlled to be the minimum. Herein, a flow occurs from the inlet side flow passage 25 to the outlet side flow passage 27, for example, when the pressure of the inlet side flow passage 25 is higher than that of the outlet side flow passage 27. At this time, a flow occurs from the inlet side flow passage 25 to the check valve 62, the feedback throttle 54 to the back pressure chamber 47, and another flow occurs from the back pressure chamber 47 to the pilot throttle upstream line 51, the pilot throttle 56, the pilot throttle downstream line 52 to the outlet side flow passage 27.

The displacement amount of the main valve 43 is controlled to the minimum so as to allow the opening amount of the feedback throttle 54 to correspond to the opening amount of the pilot throttle 56 by the above-described position feedback action. In accordance therewith, the flow rate from the inlet side flow passage 25 to the outlet side flow passage 27 can variably be controlled to be the minimum by controlling the opening amount of the main valve throttle 53 to the minimum.

Regarding the function of load check, a reverse flow from the outlet side flow passage 27 to the inlet side flow passage 25 can occur when the pressure of the inlet side flow passage 25 is lower than that of the outlet side flow passage 27. At this time, a flow occurs from the outlet side flow passage 27 to the pilot throttle downstream line 52, the pilot throttle 56, the pilot throttle upstream line 51, the back pressure chamber 47, the feedback throttle 54, the check valve 62 to the inlet side flow passage 25, but the flow is blocked by the check valve 62. As a result, since the pressures of the back pressure chamber 47 and the outlet side flow passage 27 are equal, the main valve 43 is displaced in the valve closing direction by forces on the main valve 43 in the valve closing direction by the pressure of the back pressure chamber 47. As a result, the seat portion 44D of the main valve 43 is seated on the main valve seat 46, and a flow from the outlet side flow passage 27 to the main valve throttle 53 to the inlet side flow passage 25 is blocked. As a result, a reverse flow from the outlet side flow passage 27 to the inlet side flow passage 25 can be prevented to achieve the function of load check.

Herein, as shown in Figs. 2 to 11, the feedback throttle 54 is configured by a small-change throttle 54A where a ratio of change in the opening amount to the displacement amount of the main valve 43 is small and a large-change throttle 54B where the ratio of change in the opening amount is large. The small-change throttle 54A and the large-change throttle 54B are separately provided on an outer peripheral surface of the main valve 43 (valve member 44) . In this case, the small-change throttle 54A and the large-change throttle 54B are alternately provided to be separated circumferentially on the main valve 43 (valve member 44) by 90 degrees, respectively. That is, two small-change throttles 54A are provided to be separated by 180 degrees circumferentially on the outer peripheral surface of the valve member 44. Two large-change throttles 54B are provided to be separated by 180 degrees circumferentially on the outer peripheral surface of the valve member 44. The small-change throttle 54A is disposed by 90 degrees circumferentially with respect to the large-change throttle 54B.

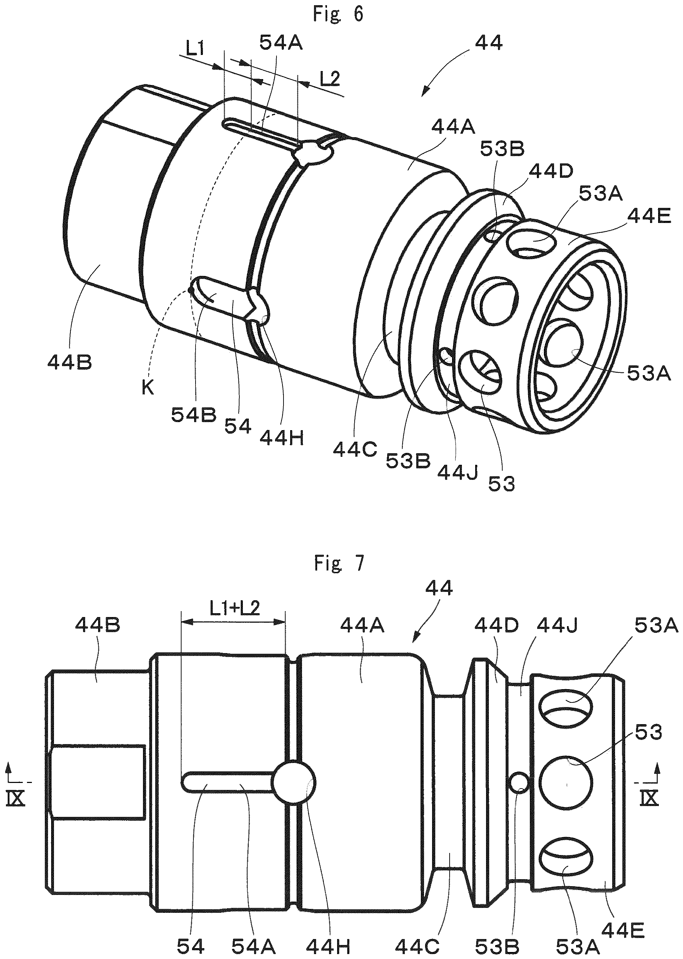

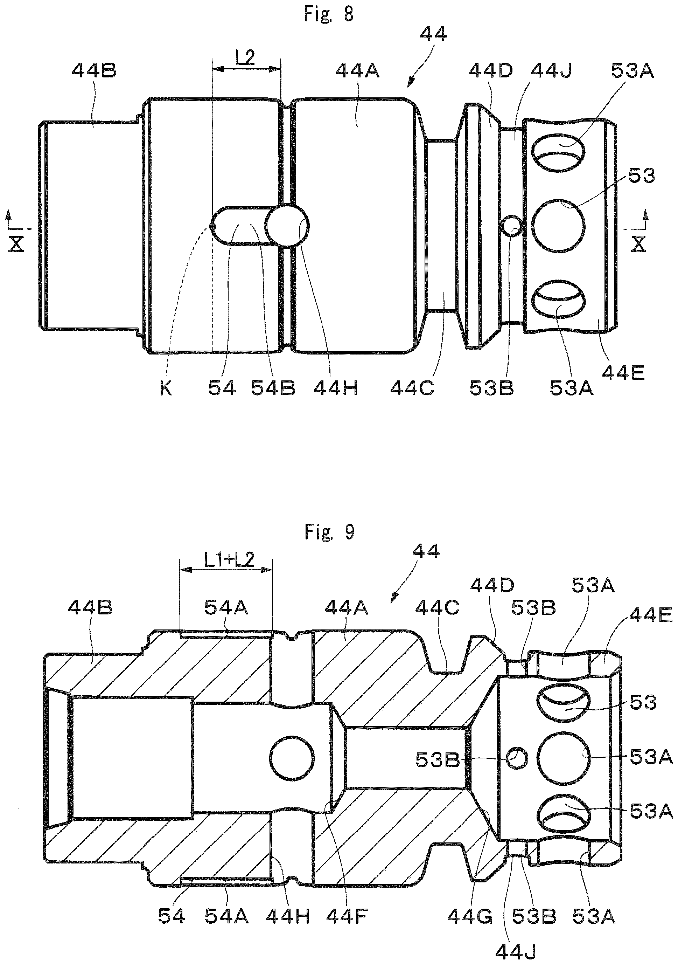

The small-change throttle 54A is configured to open in a displacement range of the main valve 43 (equivalent to a section L1 in Fig. 6) where an opening portion of at least the main valve throttle 53 (lateral hole 53A) is shut off. In this case, as shown in Fig. 9, the small-change throttle 54A extends in the axial direction of the main valve 43 and is formed in the main valve 43 (valve member 44) as a notch (groove) with constant depth. Also, the small-change throttle 54A extends in the axial direction of the main valve 43 (valve member 44) both in "a displacement range of the main valve 43 (equivalent to a section L1 in Fig. 6) where the opening portion of the main valve throttle 53 (lateral hole 53A) is shut off" and "a displacement range of the main valve 43 (equivalent to a section L2 in Fig. 6) where the opening portion of the main valve throttle 53 (lateral hole 53A) is open".

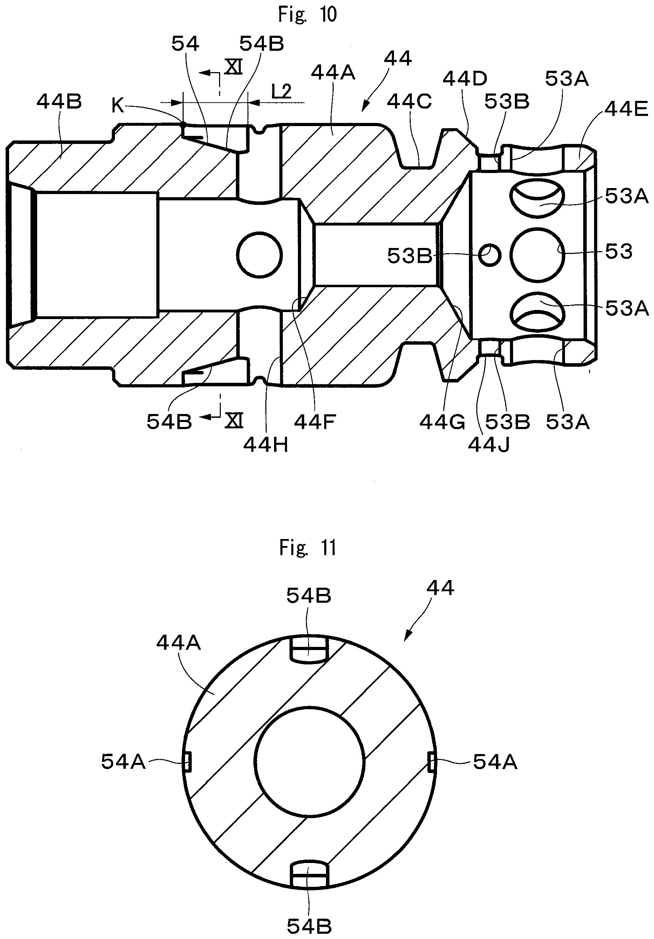

Meanwhile, the large-change throttle 54B is configured to allow the displacement amount of the main valve 43 where an opening portion of the large-change throttle 54B is switched between open and shut-off modes to coincide with the displacement amount of the main valve 43 where the opening portion of the main valve throttle 53 (lateral hole 53A) is switched between open and shut-off modes. That is, the large-change throttle 54B is configured to open in the displacement range of the main valve 43 (equivalent to the section L2 in Fig. 6) where the opening portion of the main valve throttle 53 (lateral hole 53A) is open. In this case, as shown in Fig. 10, the large-change throttle 54B extends in the axial direction of the main valve 43 and is formed in the main valve 43 (valve member 44) as a groove (notch) that is deeper toward a tip end side of the main valve 43. Also, the large-change throttle 54B extends in the axial direction of the main valve 43 (valve member 44) in "the displacement range of the main valve 43 (equivalent to the section L2 in Fig. 6) where the opening portion of the main valve throttle 53 (lateral hole 53A) is open".

As a result, according to the first embodiment, the feedback throttle 54 has a boundary portion K that divides a section where the opening amount of the feedback throttle 54 changes such that a ratio of change in the opening amount of the feedback throttle 54 to a displacement of the main valve 43 in the direction coming closer to the main valve seat 46 becomes smaller. The boundary portion K corresponds to a portion that divides a section having different ratios of change (change portion) . The boundary portion K is located in a displacement area of the main valve 43 corresponding to a position where an opening portion of the main valve throttle 53 (lateral hole 53A) is shut off with respect to the displacement of the main valve 43 in the direction coming closer to the main valve seat 46. In other words, the boundary portion K is located at a position coinciding with the displacement (displacement area) of the main valve 43 corresponding to a position where the opening portion of the main valve throttle 53 (lateral hole 53A) is shut off. In this case, the feedback throttle 54 has a small-change section L1 where a ratio of change in the opening amount of the feedback throttle 54 to the displacement of the main valve 43 is small and a large-change section L2 where the ratio of change in the opening amount is large.

The small-change section L1 corresponds to the small-change throttle 54A. The small-change section L1 is located in a section of the main valve 43 in the direction coming closer to the main valve seat 46, with the displacement (displacement area) of the main valve 43 corresponding to a position where the opening portion of the main valve throttle 53 (lateral hole 53A) is switched between open and shut-off modes, defined as a boundary. The large-change section L2 corresponds to the large-change throttle 54B and the small-change throttle 54A. The large-change section L2 is located in a section of the main valve 43 in the direction away from the main valve seat 46, with the displacement (displacement area) of the main valve 43 corresponding to the position where the opening portion of the main valve throttle 53 (lateral hole 53A) is switched between the open and shut-off modes, defined as a boundary. In the first embodiment, the feedback throttle 54 is configured by two types of notches having different positions where the feedback throttle 54 is open with respect to the displacement of the main valve 43 (displacement position, displacement area), that is, by the small-change throttle 54A and the large-change throttle 54B.

In the first embodiment, the boundary portion K where a ratio of change in the opening amount of the feedback throttle 54 changes (that is, a boundary portion K where the large-change throttle 54B is switched between open and shut-off modes) is located in the displacement area of the main valve 43 corresponding to the position where the opening portion of the main valve throttle 53 (lateral hole 53A) is shut off with respect to the displacement of the main valve 43 in the direction coming closer to the main valve seat 46. In other words, the boundary portion K is located at a position coinciding with the displacement (displacement area) of the main valve 43 corresponding to the position where the opening portion of the main valve throttle 53 (lateral hole 53A) is shut off. In this case, the term "coinciding with" refers to not only "fully coinciding with", but also not fully coinciding with (substantially coinciding with) due to inevitable shifts from production errors and the like, for example. Also, the term "coinciding with" also refers to the case where the main valve throttle 53 shifts in an increased proportional control range of the opening amount of the main valve throttle 53, for example, and in the range capable of inhibiting vibrational behavior of the displacement of the main valve 43 from fluid forces. For example, the displacement amount of the main valve 43 (axial displacement amount from maximum valve opening position to maximum valve closing position) is defined as "H". In this case, the boundary portion K is located at a "coinciding with" position even when the main valve throttle 53 shifts by approximately "± (1/35 to 1/70) of H", for example, from the "fully coinciding with" position with the displacement (displacement area) of the main valve 43 corresponding to the position where the opening portion of the main valve throttle 53 (lateral hole 53A) is shut off. That is, the "coinciding with" position can include a "not fully coinciding with" position.

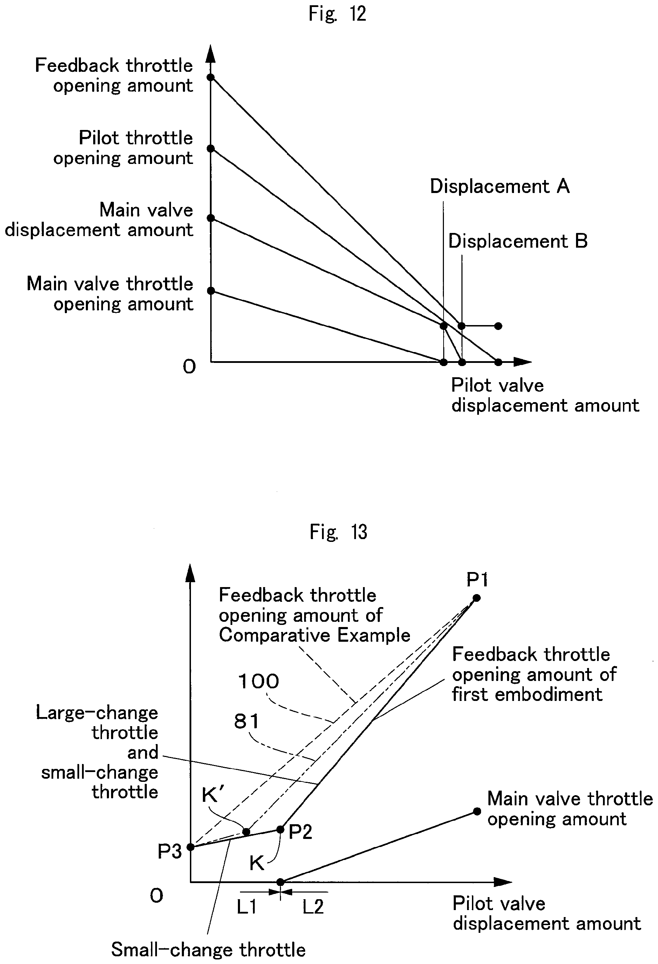

Figs. 12 and 13 show a characteristic of the flow control valve 33 according to the first embodiment of the present invention. With reference to Figs. 12 and 13, the state of the main valve 43 depending on the displacement amount of the pilot valve 55 will be described. When the displacement amount of the pilot valve 55 is "0", the opening amount of the pilot throttle 56 is a maximum value, and the displacement amount of the main valve 43 in the valve opening direction and the opening amount of the main valve throttle 53 are maximum values as well. Fig. 5 shows the state of the main valve 43.

Subsequently, in Fig. 12, when the displacement amount of the pilot valve 55 changes from "0" to "Displacement A", the opening amount of the pilot throttle 56 decreases and thus the displacement amount of the main valve 43 and the opening amount of the main valve throttle 53 decrease as well, and the opening amount of the main valve throttle 53 reaches "0". At this time, the opening amount of the feedback throttle 54, as shown in Fig. 13, is configured by the total opening amount of the small-change throttle 54A and the large-change throttle 54B. Fig. 4 shows the state of the main valve 43 in the "Displacement A" of the pilot valve 55.

Subsequently, in Fig. 12, when the displacement amount of the pilot valve 55 changes from the "Displacement A" to the "Displacement B", the opening amount of the pilot throttle 56 decreases, and thus the displacement amount of the main valve 43 decreases to "0" . At this time, the opening amount of the feedback throttle 54, as shown in Fig. 13, is configured by the opening amount of the small-change throttle 54A only. Fig. 3 shows the state of the main valve 43 in the "Displacement B" of the pilot valve 55.

In the above first embodiment, the proportional control range of the opening amount of the main valve throttle 53 can be expanded with respect to the proportional control range of the opening amount of the pilot throttle 56. Vibrational behavior of the displacement of the main valve 43 from fluid forces can be inhibited to achieve high-precision flow rate control near the displacement (displacement area) of the main valve 43 where the opening portion of the main valve throttle 53 (lateral hole 53A) is switched between open and shut-off modes. This advantage will be described by comparing the characteristic of the flow control valve 33 according to the first embodiment and the characteristic of the flow control valve 101 (Fig. 24) of the Comparative Example.

Figs. 12 and 13 show a characteristic of the flow control valve 33 according to the first embodiment of the present invention. On the other hand, a broken line (characteristics line 100) in Fig. 13 and Fig. 25 show a characteristic of the flow control valve 101 (Fig. 24) of the Comparative Example. In the first embodiment, as shown in Fig. 13, the opening amount of the feedback throttle 54 is configured by the total opening amount of the small-change throttle 54A and the large-change throttle 54B in the displacement range of the main valve 43 (equivalent to a section L2 in Fig. 6) where the main valve throttle 53 is open, while allowing the feedback throttle 54 to have the minimum opening amount and the maximum opening amount coinciding with those of the feedback throttle 103 of the Comparative Example.

Thus, a ratio of change in the opening amount of the feedback throttle 54 according to the first embodiment can be increased with respect to a ratio of change in the opening amount of the feedback throttle 103 of the Comparative Example. As a result, as shown in Figs. 12 and 25, the range of the displacement amount of the pilot valve in the first embodiment from "0" to "Displacement A" can be expanded with respect to the range of the displacement amount of the pilot valve of the Comparative Example from "0" to "Displacement A". Consequently, the proportional control range of the opening amount of the main valve throttle 53 can be expanded to improve the proportional controllability.

As shown in Fig. 13, the opening amount of the feedback throttle 54 is configured by the small-change throttle 54A only in the displacement range of the main valve 43 (corresponding to a section L1 in Fig. 6) where the opening portion of the main valve throttle 53 (lateral hole 53A) is shut off. Thus, a ratio of change in the opening amount of the feedback throttle 54 according to the first embodiment can be decreased with respect to a ratio of change in the opening amount of the feedback throttle 103 of the Comparative Example.

As a result, as shown in Figs. 12 and 25, the range of the pilot valve in the first embodiment from "Displacement A" to "Displacement B" can be narrowed with respect to the range of the pilot valve of the Comparative Example from "Displacement A" to "Displacement B". Thus, the pressure that functions as a position feedback action with respect to the displacement of the main valve 43 can be increased. Consequently, the relative effect of fluid forces on the displacement of the main valve 43 can be reduced, and vibrational behavior of the displacement of the main valve 43 from fluid forces can be inhibited.

As described above, according to the first embodiment, the feedback throttle 54 has a boundary portion K that divides a section where the opening amount of the feedback throttle 54 changes such that a ratio of change in the opening amount of the feedback throttle 54 to a displacement of the main valve 43 in the direction coming closer to the main valve seat 46 becomes smaller. The boundary portion K is located in a displacement area of the main valve 43 corresponding to a position where the opening portion of the main valve throttle 53 (lateral hole 53A) is shut off with respect to the displacement of the main valve 43 in the direction coming closer to the main valve seat 46. Thus, as the opening amount of the pilot throttle 56 gradually decreases, the main valve 43 is displaced until the opening amount of the feedback throttle 54 reaches the boundary portion K, and in this section, that is, "section L2", the opening amount of the main valve throttle 53 can be proportionally controlled.

Further, when the opening amount of the pilot throttle 56 decreases, the main valve 43 is displaced until the opening amount of the feedback throttle 54 reaches a corresponding value, but after the main valve 43 passes through the boundary portion K, the ratio of change in the opening amount of the feedback throttle 54 becomes small. Thus, a ratio of change in the displacement of the main valve 43 becomes larger than before the main valve 43 passes through the boundary portion K to allow the main valve 43 to be seated on the main valve seat 46. In this section, or "section L1", the opening portion of the main valve throttle 53 (lateral hole 53A) is shut off and the ratio of change in the displacement of the main valve 43 is large. Therefore, the range where the opening portion of the main valve throttle 53 (lateral hole 53A) is shut off can be reduced with respect to the proportional control range of the opening amount of the pilot throttle 56, and the range where the main valve throttle 53 is open can be expanded. That is, the above-mentioned first problem can be solved.

In addition, in the section after the main valve 43 passes through the boundary portion K, or "section L1", a higher ratio of change in the displacement of the main valve 43 means higher pressure that functions as a position feedback action with respect to the displacement of the main valve 43. Thus, the relative effect of fluid forces on the displacement of the main valve 43 can be reduced. Therefore, vibrational behavior of the displacement of the main valve 43 from fluid forces can be inhibited. That is, the above-mentioned second problem can be solved.

According to the first embodiment, the feedback throttle 54 has a small-change section L1 and a large-change section L2. The small-change section L1 is located in a section of the main valve 43 in the direction coming closer to the main valve seat 46, with a displacement position (displacement area) corresponding to a position of the main valve 43 where the opening portion of the main valve throttle 53 (lateral hole 53A) is switched between open and shut-off modes, defined as a boundary. The large-change section L2 is located in a section of the main valve 43 in the direction away from the main valve seat 46, with the displacement position (displacement area) of the main valve 43 corresponding to the position where the opening portion of the main valve throttle 53 (lateral hole 53A) is switched between the open and shut-off modes, defined as a boundary. Thus, the boundary between the small-change section L1 and the large-change section L2 can be defined as a boundary portion K where a ratio of change in the opening amount of the feedback throttle 54 changes.

According to the first embodiment, the feedback throttle 54 is configured by two types of notches having different displacement positions (displacement areas) where the feedback throttle 54 is open with respect to the displacement of the main valve 43, that is, by a small-change throttle 54A and a large-change throttle 54B. Thus, the boundary between "one notch (small-change throttle 54A)" and "other notch (large-change throttle 54B)" of the two types of notches can be defined as a boundary portion K where a ratio of change in the opening amount of the feedback throttle changes.

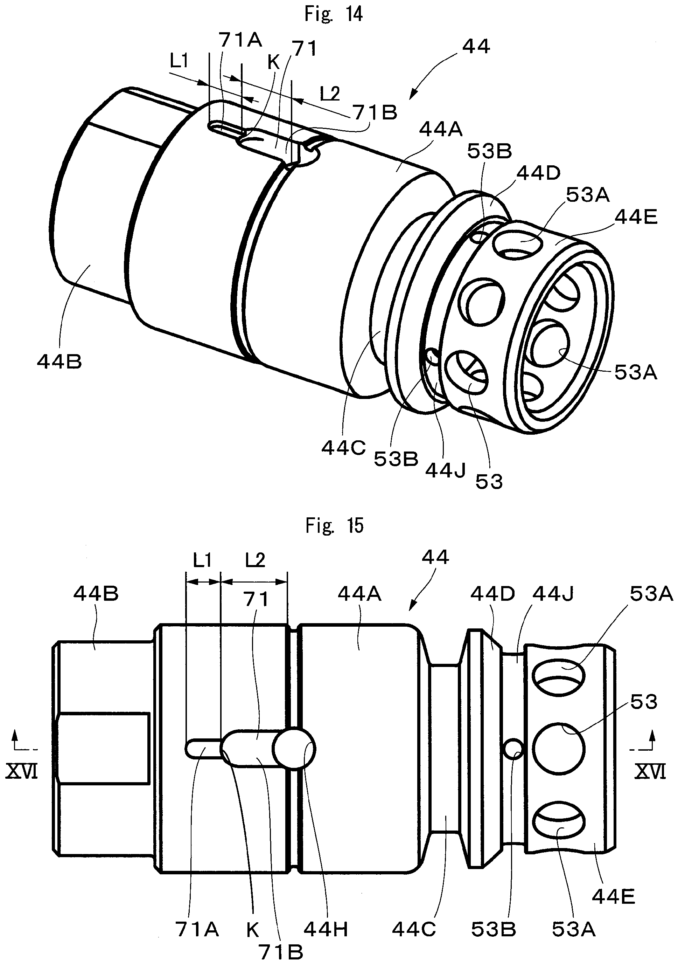

Subsequently, Figs. 14 to 17 show a second embodiment of the present invention. The second embodiment is characterized in that a feedback throttle is configured on the way by one type of notch having a different width and depth. In the second embodiment, the component elements that are identical to those of the foregoing first embodiment will be simply denoted by the same reference numerals to avoid repetitions of similar explanations.

A feedback throttle 71 according to the second embodiment is configured by a small-change throttle 71A where a ratio of change in the opening amount to the displacement amount of the main valve 43 is small and a large-change throttle 71B where the ratio of change in the opening amount is large so as to communicate with each other. That is, the feedback throttle 71 is configured by one type of throttle so as to communicate the small-change throttle 71A and the large-change throttle 71B with each other. Two feedback throttles 71 are provided to be separated by 180 degrees circumferentially on the main valve 43 (valve member 44).

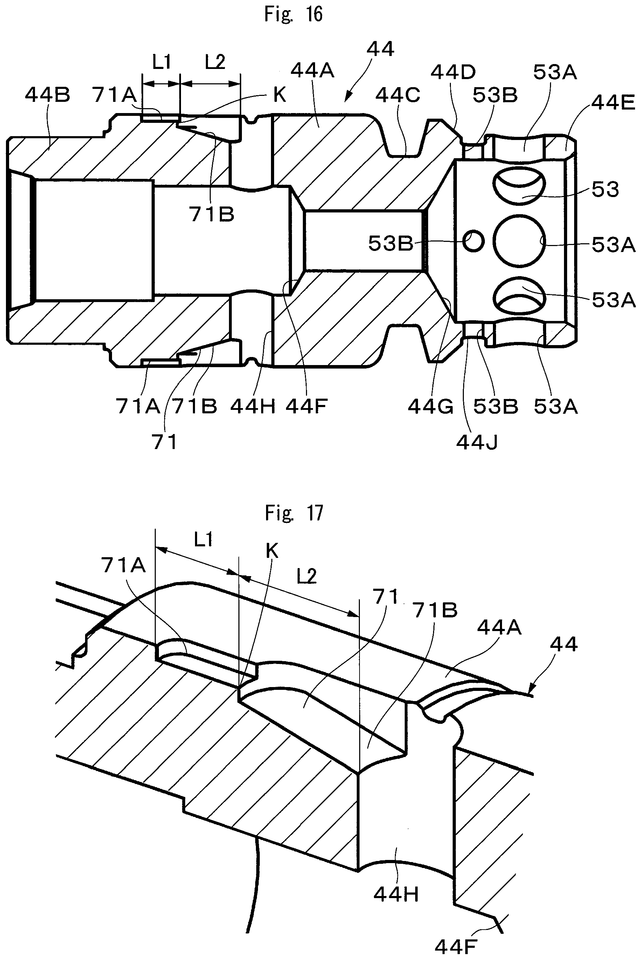

The small-change throttle 71A is configured to open in a displacement range of the main valve 43 (equivalent to a section L1 in Fig. 14) where an opening portion of the main valve throttle 53 (lateral hole 53A) is shut off. In this case, as shown in Figs. 16 and 17, the small-change throttle 71A extends in the axial direction of the main valve 43 and is formed in the main valve 43 (valve member 44) as a notch (groove) with constant depth.

Meanwhile, the large-change throttle 71B is connected to the small-change throttle 71A, and is configured to allow the displacement amount of the main valve 43 when the mode is switched from the small-change throttle 71A to the large-change throttle 71B to coincide with the displacement amount of the main valve 43 where the opening portion of the main valve throttle 53 (lateral hole 53A) is switched between open and shut-off modes. That is, the large-change throttle 71B is configured to open in the displacement range of the main valve 43 (equivalent to the section L2 in Fig. 14) where the opening portion of the main valve throttle 53 (lateral hole 53A) is open. In this case, as shown in Figs. 16 and 17, the large-change throttle 71B extends in the axial direction of the main valve 43 and is formed in the main valve 43 (valve member 44) as a groove (notch) that is deeper toward a tip end side of the main valve 43. The large-change throttle 71B is wider and deeper than the small-change throttle 71A.

As a result, in the second embodiment, as in the first embodiment, the feedback throttle 71 has a boundary portion K that divides a section where the opening amount of the feedback throttle 71 changes such that a ratio of change in the opening amount of the feedback throttle 71 to a displacement of the main valve 43 in the direction coming closer to the main valve seat 46 becomes smaller. The boundary portion K is located in a displacement area of the main valve 43 corresponding to a position where an opening portion of the main valve throttle 53 (lateral hole 53A) is shut off with respect to the displacement of the main valve 43 in the direction coming closer to the main valve seat 46. In this case, the feedback throttle 71 has a small-change section L1 where a ratio of change in the opening amount of the feedback throttle 71 to the displacement of the main valve 43 is small and a large-change section L2 where the ratio of change in the opening amount is large.

The small-change section L1 corresponds to the small-change throttle 71A. The small-change section L1 is located in a section of the main valve 43 in the direction coming closer to the main valve seat 46, with a displacement (displacement position, displacement area) of the main valve 43 corresponding to a position where the opening portion of the main valve throttle 53 (lateral hole 53A) is switched between open and shut-off modes, defined as a boundary. The large-change section L2 corresponds to the large-change throttle 71B. The large-change section L2 is located in a section of the main valve 43 in the direction away from the main valve seat 46, with the displacement (displacement position, displacement area) of the main valve 43 where the opening portion of the main valve throttle 53 (lateral hole 53A) is switched between the open and shut-off modes, defined as a boundary. In the second embodiment, the feedback throttle 71 is configured by one type of notch that communicates with each other in combinations of different width and depth, or one type of notch (groove) for allowing the small-change throttle 71A and the large-change throttle 71B to communicate with each other.

In the second embodiment, the feedback throttle 71 is configured by the small-change throttle 71A and the large-change throttle 71B as described above, and its basic operation is not particularly different from that in the above-described first embodiment. That is, the feedback throttle 71 according to the second embodiment can achieve an opening characteristic shown in Fig. 13. Thus, the second embodiment can provide a similar effect as the first embodiment. In particular, according to the second embodiment, the feedback throttle 71 is configured by one type of notch that communicates with each other in combinations of different width and depth, or a notch for allowing the small-change throttle 71A and the large-change throttle 71B to communicate with each other. Thus, a portion having a different width and depth in the notch, or a connecting portion (boundary) between the small-change throttle 71A and the large-change throttle 71B can be defined as a boundary portion K where a ratio of change in the opening amount of the feedback throttle 71 changes.

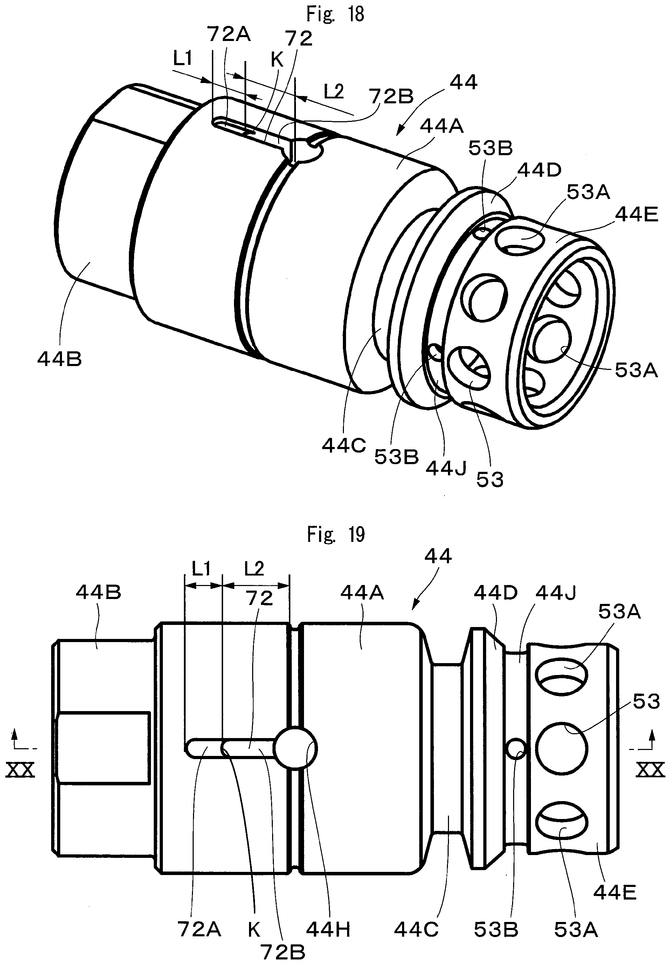

In the above-mentioned second embodiment, the case where the feedback throttle 71 is configured by one type of notch that communicates with each other in combinations of different width and depth, or a notch (groove) for allowing the small-change throttle 71A and the large-change throttle 71B to communicate with each other was illustrated. However, not limited to this, for example, as in a first modification shown in Figs. 18 to 20, the feedback throttle 72 may be configured by one type of notch that communicates with each other in combinations of same width but different depth, or a notch (groove) for allowing the small-change throttle 72A and the large-change throttle 72B to communicate with each other.

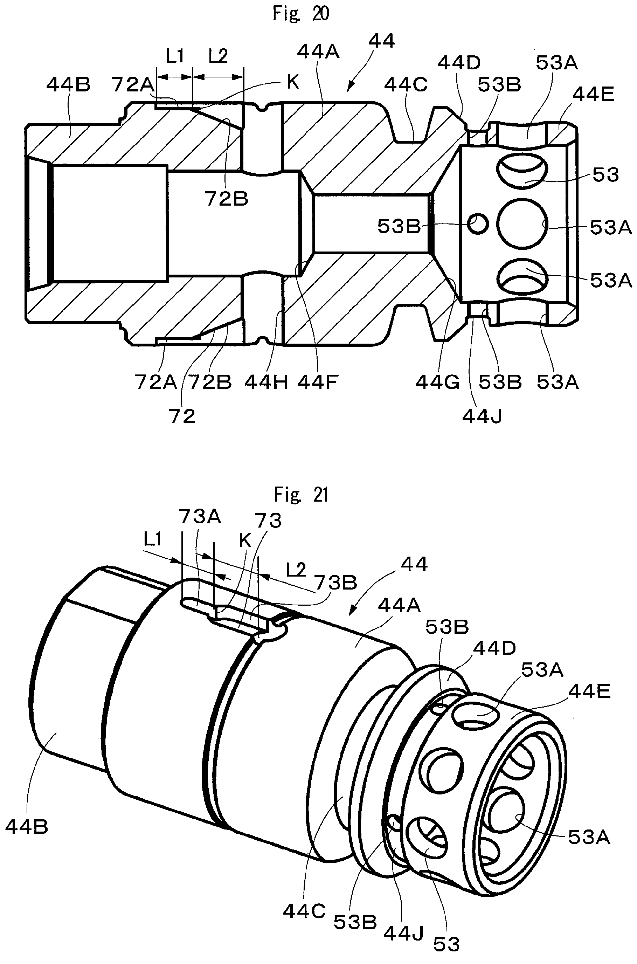

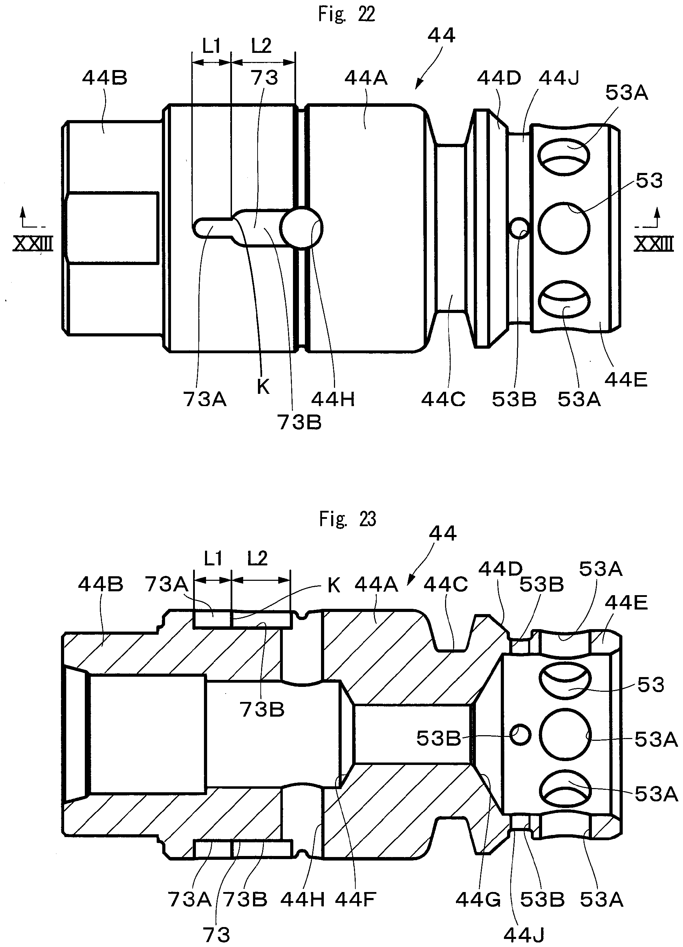

Also, for example, as in a second modification shown in Figs. 21 to 23, the feedback throttle 73 may be configured by one type of notch that communicates with each other in combinations of same depth but different width, or a notch (groove) for allowing the small-change throttle 73A and the large-change throttle 73B to communicate with each other. Not shown in figures, a feedback throttle may be configured by two or more types of mutually communicating notches configured in different combinations of a width and a depth. That is, the feedback throttle can be configured by at least one or more types of mutually communicating notches configured in at least one or more different combinations of a width and a depth.

In the above-mentioned first embodiment, the case where the feedback throttle 54 is configured by two types of notches having different positions where the feedback throttle 54 is open with respect to the displacement of the main valve 43 (displacement position, displacement area), or by the small-change throttle 54A and the large-change throttle 54B, was illustrated. However, not limited to this, for example, the feedback throttle may be configured by 3 or more types of notches having different positions where the feedback throttle is open with respect to the displacement of the main valve (displacement position, displacement area). That is, the feedback throttle can be configured by at least two or more types of notches having different positions where the feedback throttle is open with respect to the displacement of the main valve (displacement position, displacement area).

In the first embodiment, the case where the boundary portion K where a ratio of change in the opening amount of the feedback throttle 54 changes is located in the displacement of the main valve 43 area corresponding to a position where the opening portion of the main valve throttle 53 (lateral hole 53A) is shut off with respect to the displacement of the main valve 43 in the direction coming closer to the main valve seat 46 was illustrated. However, not limited to this, for example, as indicated by a characteristics line 81 by a two-dot chain line in Fig. 13, the boundary portion K' where a ratio of change in the opening amount of the feedback throttle changes may be located in the displacement section of the main valve closer to the main valve seat (for example, in a section L1 in Fig. 6) than in the displacement area of the main valve corresponding to a position where the opening portion of the main valve throttle is shut off with respect to the displacement of the main valve in the direction coming closer to the main valve seat.

In this case, the boundary portion K' can be located within a triangle surrounded by the points P1, P2 and P3 in Fig. 13. As a result, the proportional control range of the opening amount of the main valve throttle can be expanded and vibrational behavior of the main valve can be inhibited compared to the characteristics line 100 indicated by a broken line in Fig. 13 of the Comparative Example. That is, the boundary portions may be configured to be located in a displacement area of the main valve corresponding to a position where an opening portion of the main valve throttle is shut off with respect to a displacement of the main valve in the direction coming closer to the main valve seat, or in a displacement section of the main valve closer to the main valve seat than the displacement area.

In other words, the boundary portion may be provided between "the displacement area of the main valve corresponding to a position where the opening portion of the main valve throttle is shut off" and "a position where the displacement amount of the main valve is 0 (position where the main valve is seated on the main valve seat)". In this case, the boundary portion is most preferably located in "the displacement area of the main valve corresponding to a position where the opening portion of the main valve throttle is shut off". The boundary portion is more preferable as it is closer to "the displacement area of the main valve corresponding to a position where the opening portion of the main valve throttle is shut off". This applies to a second embodiment, a first modification, and a second modification.

In the first embodiment, the case where the feedback throttle 54 is configured to have one boundary portion K where a ratio of change in the opening amount of the feedback throttle 54 changes was illustrated. However, not to limited to this, a plurality of (two, 3 or more) boundary portions may be provided. In this case, for example, a plurality of boundary portions may be continuous along the lines P1-P2 and P2-P3 in Fig. 13. That is, the feedback throttle may be configured to have at least one or more boundary portions that divide a section where the opening amount of the feedback throttle changes such that a ratio of change in the opening amount of the feedback throttle to a displacement of the main valve in the direction coming closer to the main valve seat becomes smaller. At least one of the boundary portions may be configured to be located in a displacement area of the main valve corresponding to a position where an opening portion of the main valve throttle is shut off with respect to the displacement of the main valve in the direction coming closer to the main valve seat, or in a displacement section of the main valve closer to the main valve seat than the displacement area. This applies to a second embodiment, a first modification, and a second modification.

In the first embodiment, one typical configuration of single (integrated or common) casing by the main housing 23 and the pilot housing 36 is described. However, not limited to this, for example, a main housing and a pilot housing may be located separately, and a connecting line may be provided between the main housing and the pilot housing. In this case, a main valve chamber is provided in the main housing. That is, the main valve chamber, like the above-described embodiment, can be configured to be provided both in a main housing and a pilot housing, or in a main housing. In other words, the main valve chamber is provided in a housing (more specifically, at least a main housing out of a main housing and a pilot housing). This applies to a second embodiment, a first modification, and a second modification.

In the first embodiment, one typical configuration of the pilot throttle 56 of the pilot valve 55 to decrease the opening amount of the pilot flow passage 50 according to the displacement of the pilot valve 55 is described. However, not limited to this, for example, the pilot throttle of the pilot valve may be configured to increase the opening amount of the pilot flow passage according to the displacement of the pilot valve. This applies to a second embodiment, a first modification, and a second modification.

In the first embodiment, one example of a flow control valve 33 controlling the flow rate of pressurized oil supplied to and discharged from the control valve for arm 18 toward the arm cylinder 9 is described. However, not limited to this, for example, the flow control valve may be applied to a flow control valve controlling the flow rate of pressurized oil supplied to and discharged from the control valve for boom 16 to the boom cylinder 8, and may be applied to a flow control valve where pressurized oil is supplied to and discharged and from a bucket cylinder or otherwise employed hydraulic actuators through a directional control valve. This applies to a second embodiment, a first modification, and a second modification.

In each of the above-described embodiments and modifications, one example of a hydraulic excavator 1 is described as a construction machine. However, not limited to this, the hydraulic excavator can widely be applied to wheel loaders, hydraulic cranes, bulldozers, and other construction machines, for example. The flow control valve 33 may be configured to variably control the flow rate of hydraulic fluid from a small flow rate to a large flow rate, depending on the displacement amount (lift amount) of the main valve 43, and it can be widely applied as a flow control valve used with each type of industrial equipment and machine instruments.

Each of the embodiments and modifications is provided for illustration, and partial substitutions or combinations of configurations shown in each of the embodiments and modifications are obviously possible.

### DESCRIPTION OF REFERENCE NUMERALS

1: Hydraulic excavator (Construction machine)
21: Control valve device
22: Housing
25: Inlet side flow passage
27: Outlet side flow passage
33: Flow control valve
36: Pilot housing
42: Main valve chamber
43: Main valve
44D: Seat portion (Valve portion)
46: Main valve seat
47: Back pressure chamber
49: Feedback flow passage
50: Pilot flow passage
53: Main valve throttle
54, 71, 72, 73: Feedback throttle
54A: Small-change throttle (Notch, Small-change section, Large-change section)
54B: Large-change throttle (Notch, Large-change section)
55: Pilot valve
56: Pilot throttle
71A,72A,73A: Small-change throttle (Notch, small-change section)
71B,72B,73B: Large-change throttle (Notch, Large-change section)
K, K': Boundary portion

## Claims

1. A flow control valve comprising:
a housing;
a main valve chamber provided in the housing;
a main valve slidably provided in the main valve chamber and having a valve portion;
a main valve seat provided on one end side of the main valve chamber and communicating or shutting off hydraulic fluid by allowing the valve portion of the main valve to be separated from and seated on the main valve seat;
an inlet side flow passage providing pressure in the direction away from the main valve seat for the main valve and introducing hydraulic fluid from the outside of the main valve chamber to the inside of the main valve chamber;
an outlet side flow passage introducing hydraulic fluid from the inside of the main valve chamber to the outside of the main valve chamber when the main valve is separated from the main valve seat and providing pressure in the direction away from the main valve seat for the main valve;
a back pressure chamber provided on other end side of the main valve chamber and providing pressure in the direction coming closer to the main valve seat for the main valve;
a feedback flow passage provided in the main valve and communicating the inlet side flow passage and the back pressure chamber;
a pilot flow passage provided in the housing and communicating the back pressure chamber and the outlet side flow passage;
a main valve throttle provided in the main valve and increasing the opening amount between the inlet side flow passage and the outlet side flow passage as the main valve is displaced in the direction away from the main valve seat;
a feedback throttle provided between the feedback flow passage and the back pressure chamber and increasing the opening amount between the feedback flow passage and the back pressure chamber as the main valve is displaced in the direction away from the main valve seat;
a pilot valve slidably provided in the housing; and
a pilot throttle provided in the pilot valve and decreasing or increasing the opening amount of the pilot flow passage as the pilot valve is displaced, wherein
in the flow control valve having a flow rate control function variably controlling the flow rate from the inlet side flow passage to the outlet side flow passage by controlling the displacement amount of the main valve, depending on the opening amount of the pilot throttle, **characterized in that**:
the feedback throttle has at least one or more boundary portions that divide a section where the opening amount of the feedback throttle changes such that a ratio of change in the opening amount of the feedback throttle to a displacement of the main valve in the direction coming closer to the main valve seat becomes smaller, wherein
at least one of the boundary portions is located in a displacement area of the main valve corresponding to a position where an opening portion of the main valve throttle is shut off with respect to the displacement of the main valve in the direction coming closer to the main valve seat, or in a displacement section of the main valve closer to the main valve seat than the displacement area.

2. The flow control valve according to claim 1, wherein
the feedback throttle has a small-change section where a ratio of change in the opening amount of the feedback throttle to a displacement of the main valve is small and a large-change section where the ratio of change in the opening amount is large, wherein
the small-change section is located in a section of the main valve in the direction coming closer to the main valve seat, with a displacement area of the main valve corresponding to a position where the opening portion of the main valve throttle is switched between open and shut-off modes, defined as a boundary, and
the large-change section is located in a section of the main valve in the direction away from the main valve seat, with the displacement area of the main valve corresponding to the position where the opening portion of the main valve throttle is switched between the open and shut-off modes, defined as a boundary.

3. The flow control valve according to claim 1, wherein
the feedback throttle is configured by at least two or more types of notches having a different position that is open with respect to a displacement of the main valve.

4. The flow control valve according to claim 1, wherein
the feedback throttle is configured by at least one or more types of mutually communicating notches configured in at least one or more different combinations of a width and a depth.
